# EUROPEAN PATENT SPECIFICATION

(11) **EP 3 541 088 B1**
(45) Date of publication and mention of the grant of the patent: **24.01.2024**
(21) Application number: 17869995.5
(22) Date of filing: 09.11.2017
(51) Int. Cl.: H04Q 11/00

(54) **METHOD, DEVICE AND SYSTEM FOR BEARING A FRAME SEQUENCE NUMBER IN A MULTICHANNEL PASSIVE OPTICAL NETWORK**
VERFAHREN, VORRICHTUNG UND SYSTEM ZUM TRAGEN EINER SEQUENZNUMMER EINES RAHMENS IN EINEM MEHRKANALIGEN PASSIVEN OPTISCHEN NETZWERK
PROCÉDÉ, DISPOSITIF ET SYSTÈME DESTINÉS À PORTER UN NUMÉRO DE SÉQUENCE DE TRAME DANS UN RÉSEAU OPTIQUE PASSIF MULTICANAL

(30) Priority: 09.11.2016 CN 201611035955
(43) Date of publication of application: 18.09.2019
(73) Proprietor: ZTE Corporation, Shenzhen, Guangdong 518057 (CN)
(72) Inventor: ZHANG, Weiliang, Shenzhen Guangdong 518057 (CN); YUAN, Liquan, Shenzhen Guangdong 518057 (CN); HUANG, Xingang, Shenzhen Guangdong 518057 (CN); GENG, Dan, Shenzhen Guangdong 518057 (CN)
(74) Representative: Aipex B.V.
(86) International application number: PCT/CN2017/110282
(87) International publication number: WO 2018/086564

(56) References cited:
- WO-A1-2012/109847
- CN-A- 101 729 940
- CN-A- 102 308 591
- CN-A- 104 601 481
- CN-A- 105 406 937
- US-A1- 2008 304 828
- US-A1- 2008 304 828
- "ONU management and control interface (OMCI) specification", ITU-T DRAFT ; STUDY PERIOD 2013-2016, INTERNATIONAL TELECOMMUNICATION UNION, GENEVA ; CH, vol. 2/15, 29 July 2010 (2010-07-29), pages 1-558, XP044027685, [retrieved on 2010-07-29]
- "8023ahD1_414", ITU-T DRAFT ; STUDY PERIOD 2001-2004, INTERNATIONAL TELECOMMUNICATION UNION, GENEVA ; CH, vol. Study Group 15, 12 May 2003 (2003-05-12), pages 1-480, XP017503533, [retrieved on 2003-05-12]

## Description

### TECHNICAL FIELD

The present disclosure relates to the field of communications and, in particular, to a method, device and system for bearing a frame sequence number of multichannel passive optical network.

### BACKGROUND

An IEEE next generation Ethernet passive optical network (NGEPON)/100Gbps EPON (100GEPON) defines that data transmission may be performed between an optical line terminal (OLT) and an optical network unit (ONU) through multiple channels. Since the multiple channels have different wavelengths, transmission delays of NGEPON data packets on these channels may be different. Therefore, an order in which the NGEPON data packets arrive at a receiving end may be different from an order in which the NGEPON data packets leave a transmitting end, and then the transmitting end needs to solve an order recovery problem of the NGEPON data packets. A current method proposed is to determine the order of the NGEPON data packets through the order in which the NGEPON data packets arrive at the receiving end, i.e., the NGEPON package arriving at the receiving end first is before the NGEPON package arriving at the receiving end latter However, since the transmission delays on the multiple channels are different, the order in which the NGEPON data packets arrive at the receiving end is unable to correctly reflect the order in which the NGEPON data packets leave the transmitting end. As a result, many compensation techniques need to be considered in this method to implement the order recovery of the NGEPON data packets on the receiving side, the method is relatively complicated and its feasibility needs to be further discussed.

A commonly used method for order recovery is defining the data packet number. However, an Ethernet frame structure, an EPON frame structure and a 10GEPON frame structure defined by the Ethernet frame structure, as a basis of defining a NGEPON frame structure do not define the number. It can be seen from the analysis below that defining the NGEPON number on the basis of the existing Ethernet, EPON, and 10GEPON frame structures will affect the existing functions, and it is much difficult to maintain the existing functions while bearing frame sequence numbers.

Since the EPON and 10GEPON are redefined on the basis of the Ethernet frame structure, the NGEPON will continue to be further redefined on the basis of the Ethernet, EPON, and 10GEPON frame structures.

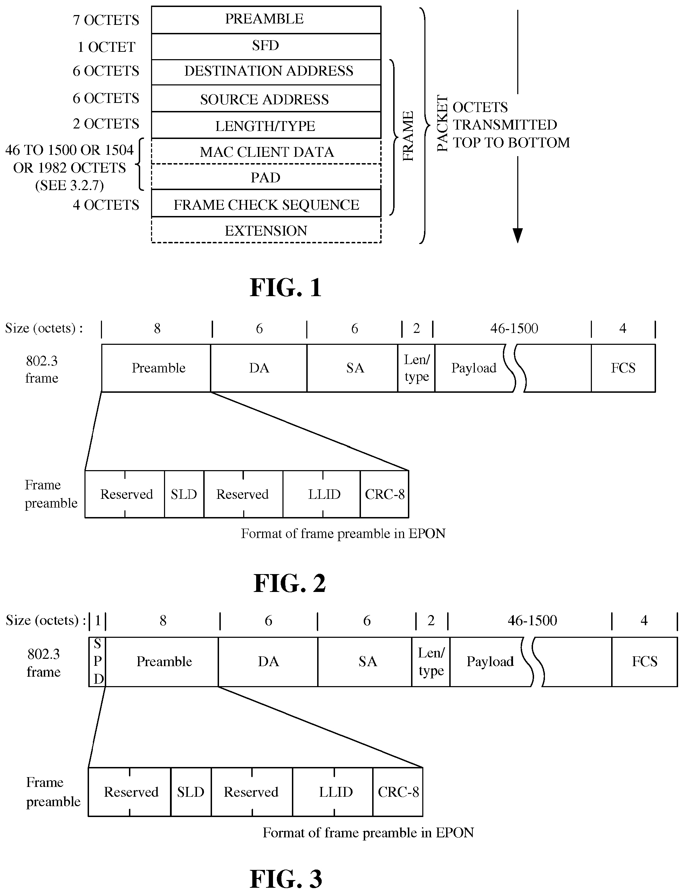

FIG. 1 is a schematic diagram of an Ethernet frame structure in the existing art of the present disclosure. The Ethernet frame structure includes a Preamble, SFD (a start of frame delimiter), destination address, source address, Length/Type domain (a payload length or a frame type), and a Frame Check Sequence.

Table 1 shows a definition of an Ethernet frame header (including the preamble and the SFD). In the data transmission process of the Ethernet, the receiving end generally needs to determine a frame start through detecting the preamble and the SFD.

**Table 1**

| Octet | Definition | Value |
|---|---|---|
| 1 | Preamble | 0x55 |
| 2 | | 0x55 |
| 3 | | 0x55 |
| 4 | | 0x55 |
| 5 | | 0x55 |
| 6 | | 0x55 |
| 7 | | 0x55 |
| 8 | SFD | 0xd5 |

EPON/10GEPON frame structures are redefined on the basis of Ethernet frame structure. FIG. 2 is a schematic diagram of EPON/10GEPON frame structures in the existing art of the present disclosure. The EPON/10GEPON frame structures are redefined on the basis of Ethernet frame structure. The EPON/10GEPON frame structure includes preamble, DA (destination address), SA (source address), Len/Type domain (payload length or a frame type), and FCS (frame check sequence).

The EPON and 10GEPON frame headers are defined as shown in table 2. The modification includes: changing the third octet into a start of frame delimiter (SLD, a start delimiter of a LLID), and the value is 0xd5 for identifying a start position of the LLID, redefining sixth and seventh octets to the logical link ID (LLID), redefining an eighth octet to CRC and checking the third to seventh octets.

**Table 2**

| Octet | Definition | Value |
|---|---|---|
| 1 | - | 0x55 |
| 2 | - | 0x55 |
| 3 | SLD | 0xd5 |
| 4 | - | 0x55 |
| 5 | - | 0x55 |
| 6 | LLID[15:8] | <mode,logical_link_id[14:8]> |
| 7 | LLID[7:0] | <logical_link_id[7:0]> |
| 8 | CRC8 | a CRC8 value calculated pointing to the third to seventh octets |

Under the condition of a certain rate, such as 1 Gbps EPON, a start of packet delimiter (SPD) is further provided before the frame structure. FIG. 1 is a schematic diagram of the EPON frame structure with the SPD in the existing art of the present disclosure. In the processing on a transmitting side, SPD transmission may overwrite several octets in the preamble. Therefore, in the Ethernet passive optical network, only 0xd5, 0x55 and 0x55 of the third octet, the fourth octet and the fifth octet in the frame header can be reliably used for frame header detection.

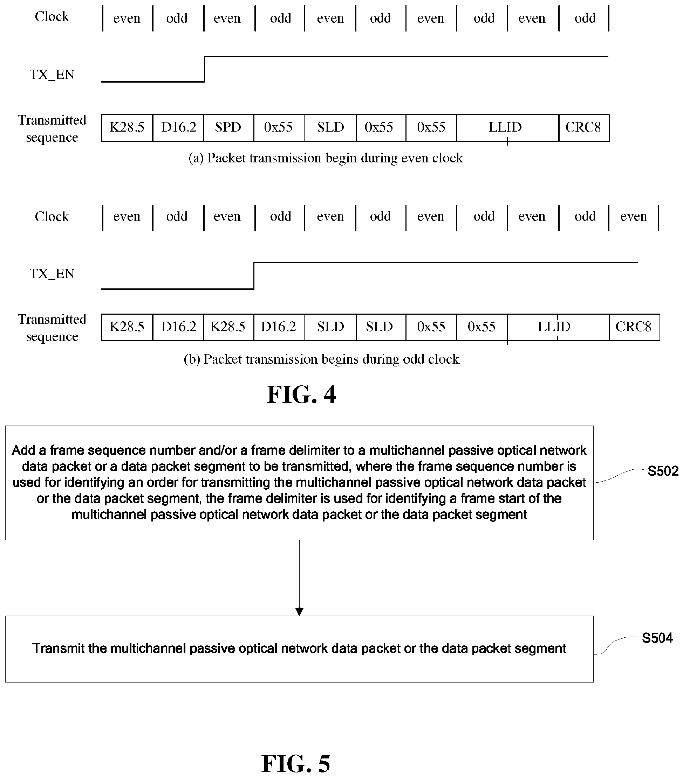

FIG. 4 is a schematic diagram illustrating that octets in a preamble header are replaced with the SPD. FIG. 4 includes two cases, illustrating that a PCS inserts the SPD and replaces the octets in the preamble header. When the SPD is at an even clock position, the SPD replaces the first octet 0x55 in the preamble, and when the SPD is at an odd clock position, two octets in the preamble header are replaced with an SPD.

Seen from the above definition of EPON and 10GEPON frame structures, no bearer of the frame sequence number is provided. Seen from the modification of the Ethernet frame structure as well as the EPON and 10GEPON frame structures, although it is a good method to carry the frame sequence number in the EPON and 10GEPON frame headers for implementing realize data order recovery, the first and second octets may be replaced with other contents in the transmission process(such as part of contents of the SPD), and cannot be used reliably for bearing the frame sequence number, the fourth and fifth octets may be used for bearing the frame sequence number, but frame identification only can rely on the third octet 0xd5 after removing the fourth and fifth octets, the identification accuracy will be greatly reduced.

No effective solution has yet been proposed for the preceding problem in the existing art. In "ONU management and control interface (OMCI) specification", the managed entity (Pseudowire performance monitoring history data) collects PM for a pseudowire termination point. Most of the attributes monitor packets received from the PSN, and may therefore be considered egress PM. An instance of this managed entity is associated with an instance of the pseudowire termination point.
The attribute "Misordered packets, usable" counts the number of packets received out of order, but which were able to be successfully re-ordered and played out. Both payload and signalling packets, if any, contribute to this count.
The attribute "Misordered packets dropped" counts the number of packets received out of sequence that were discarded, either because the ONU did not support reordering or because it was too late to reorder them. Both payload and signaling packets, if any, contribute to this count. The managed entity (PW ATM performance monitoring history data) collects performance monitoring data associated with an ATM pseudowire. Instances of this managed entity are created and deleted by the OLT. An instance of this managed entity is associated with an instance of the PW ATM configuration data managed entity.
The attribute "Downstream reordered packets counter" counts packets detected out of sequence via the control word sequence number, but successfully re-ordered.
The attribute "Downstream misordered packets counter" counts packets detected out of order via the control word sequence numbers.
In "IEEE Draft P802.3ahTM/D1.414", the Event Notification OAMPDU, identified with the Code field set to 0x01, is used to alert the remote device of link events. The OAM client increments the Event Sequence Number for each unique Event Notification OAMPDU formed by the OAM client. The Event Notification OAMPDU may be sent multiple times with the same sequence number. Any particular event can be signaled in only one unique Event Notification OAMPDU (though that PDU may be transmitted multiple times). Upon receiving an Event Notification OAMPDU, the OAM client compares the sequence number with the last received Event Sequence Number. The PHY PMI Aggregation functions provide a fragmentation procedure at the transmitter and a reassembly procedure at the receiver.

### SUMMARY

Embodiments of the present disclosure provide a method, device and system for bearing a frame sequence number of a multichannel passive optical network to at least solving the problem that the Ethernet passive optical network data packet cannot be recovered in order in the existing art.

According to an embodiment of the present disclosure, a method for bearing a frame sequence number of a multichannel passive optical network is provided. The method includes: adding the frame sequence number and a frame delimiter to a multichannel passive optical network data packet or a data packet segment to be transmitted, wherein the frame sequence number is used for identifying an order for transmitting the multichannel passive optical network data packet or the data packet segment, the frame delimiter is used for identifying a frame start of the multichannel passive optical network data packet or the data packet segment; and transmitting the multichannel passive optical network data packet or the data packet segment;wherein the frame delimiter is used for recovering frame start detection to obtain the frame sequence number in a receiving end, and the frame sequence number is used for recovering a transmission order of the multichannel passive optical network data packet or the data packet segment in the receiving end; characterized in that the frame sequence number is added to the multichannel passive optical network data packet or the data packet segment to be transmitted in one of the following manners:adding an encapsulation layer outside the multichannel passive optical network data packet to be transmitted, and adding the frame sequence number in the added encapsulation layer; or splitting the multichannel passive optical network data packet to be transmitted into segments, adding an encapsulation layer outside each of the segments, and adding the frame sequence number in the added encapsulation layer.

In an embodiment, the frame sequence number is added to the multichannel passive optical network data packet or the data packet segment to be transmitted in the following manner adding the frame sequence number to a header of the multichannel passive optical network data packet or the data packet segment;

In an embodiment, the frame delimiter is added to the multichannel passive optical network data packet or the data packet segment to be transmitted in the following manner: reusing the frame delimiter of the multichannel passive optical network data packet or the data packet segment; adding the frame delimiter to a header of the multichannel passive optical network data packet or the data packet segment; adding a layer of packaging outside the multichannel passive optical network data packet to be transmitted, and adding the frame delimiter in the added packaging; or splitting the multichannel passive optical network data packet to be transmitted into segments, adding a layer of packaging outside each of the segments, and adding the frame delimiter in the added packaging.

According to an embodiment of the present disclosure, another method for bearing a frame sequence number of a multichannel passive optical network is provided. The method includes: receiving a multichannel passive optical network data packet or a data packet segment; parsing the multichannel passive optical network data packet or the data packet segment to obtain a frame delimiter and a frame sequence number borne in the multichannel passive optical network data packet or the data packet segment; and determining, according to the frame delimiter and the frame sequence number, a frame start of the multichannel passive optical network data packet or the data packet segment and an order, in which the multichannel passive optical network data packet or the data packet segment is transmitted by a transmitting end, respectively; wherein the frame delimiter is used for recovering frame start detection to obtain the frame sequence number in a receiving end, and the frame sequence number is used for recovering a transmission order of the multichannel passive optical network data packet or the data packet segment in the receiving end; characterized in that the frame sequence number is comprised in an encapsulation layer which is outside the received multichannel passive optical network data packet; or the frame sequence number is comprised in an encapsulation layer outside the received data packet

In an embodiment, the frame delimiter borne in the multichannel passive optical network data packet or the data packet segment is obtained by parsing the multichannel passive optical network data packet or the data packet segment in the following manner: recovering first m octets of the multichannel passive optical network data packet or the data packet segment in a physical coding sublayer (PCS), where the first m octets are used for detecting a start position of the multichannel passive optical network data packet or the data packet segment; and submitting the multichannel passive optical network data packet or the data packet segment to an MAC layer, where the first m octets at a head of the multichannel passive optical network data packet or the data packet segment is detected in the MAC layer to obtain a header of the multichannel passive optical network data packet or the data packet segment and acquire the frame delimiter; where m and n are positive integers.

In an embodiment, the frame delimiter borne in the multichannel passive optical network data packet or the data packet segment is obtained by parsing the multichannel passive optical network data packet or the data packet segment in the following manner: parsing the header of the multichannel passive optical network data packet or the data packet segment to obtain the frame delimiter.

In an embodiment, the frame sequence number borne in the multichannel passive optical network data packet or the data packet segment is obtained by parsing the multichannel passive optical network data packet or the data packet segment in the following manner: acquiring the frame sequence number in a PCS; submitting the frame sequence number to the MAC layer through primitive while submitting the multichannel passive optical network data packet or the data packet segment to the MAC layer, and obtaining the multichannel passive optical network data packet or the data packet segment and the frame sequence number corresponding to the multichannel passive optical network data packet or the data packet segment in the MAC layer.

In an embodiment, the frame sequence number borne in the multichannel passive optical network data packet or the data packet segment is obtained by parsing the multichannel passive optical network data packet or the data packet segment in the following manner: parsing the header of the multichannel passive optical network data packet or the data packet segment to obtain the frame sequence number.

In an embodiment, after determining, according to the frame delimiter and the frame sequence number, the frame start of the multichannel passive optical network data packet or the data packet segment respectively and the order for transmitting the multichannel passive optical network data packet or the data packet segment by the transmitting end, the method further includes: recovering and /or acquiring the frame delimiter to obtain a start of the multichannel passive optical network data packet or the data packet segment, and acquiring the frame sequence number to recover an order of the multichannel passive optical network data packet or the data packet segment.

According to another embodiment of the present disclosure, a device for bearing a frame sequence number of a multichannel passive optical network is provided. The device includes: an adding module, configured to add a frame sequence number and a frame delimiter to a multichannel passive optical network data packet or a data packet segment to be transmitted, where the frame sequence number is used for identifying an order for transmitting the multichannel passive optical network data packet or the data packet segment, the frame delimiter is used for identifying a frame start of the multichannel passive optical network data packet; and a transmitting module, configured to transmit the multichannel passive optical network data packet or the data packet segment.

In an embodiment, the adding module includes: a first adding unit, configured to add the frame sequence number to a header of the multichannel passive optical network data packet or the data packet segment; a second adding unit, configured to add a layer of packaging outside the multichannel passive optical network data packet to be transmitted, and add the frame sequence number in the added packaging; or a third adding unit, configured to split the multichannel passive optical network data packet to be transmitted into segments, add a layer of packaging outside each of the segments, and add the frame sequence number in the added packaging.

In an embodiment, the adding module includes: a fourth adding unit, configured to reuse the frame delimiter of the multichannel passive optical network data packet or the data packet segment; a fifth adding unit, configured to add the frame delimiter to a header of the multichannel passive optical network data packet or the data packet segment; a sixth adding unit, configured to add a layer of packaging outside the multichannel passive optical network data packet to be transmitted, and add the frame delimiter in the added packaging; or a seventh adding unit, configured to split the multichannel passive optical network data packet to be transmitted into segments, add a layer of packaging outside each of the segments, and add the frame delimiter in the added packaging.

According to another embodiment of the present disclosure, another device for bearing a frame sequence number of a multichannel passive optical network is provided. The device includes: a receiving module, configured to receive a multichannel passive optical network data packet or a data packet segment; a parsing module, configured to parse the multichannel passive optical network data packet or the data packet segment and obtain a frame delimiter and a frame sequence number borne in the multichannel passive optical network data packet or the data packet segment; and a determining module, configured to determine, according to the frame delimiter and the frame sequence number, a frame start of the multichannel passive optical network data packet and an order, in which the multichannel passive optical network data packet is transmitted by a transmitting end, respectively.

In an embodiment, the device further includes: an acquiring module, configured to after determining, according to the frame delimiter and the frame sequence number, the frame start of the multichannel passive optical network data packet and the order, in which the multichannel passive optical network data packet is transmitted by the transmitting end, respectively, obtain a start of the multichannel passive optical network data packet or the data packet segment according to the frame delimiter; and a recovering module, configured to recover an order of the multichannel passive optical network data packet or the data packet segment according to the frame sequence number

In an embodiment, the parsing module includes: a recovering unit, configured to recover first m octets of the multichannel passive optical network data packet or the data packet segment in a physical coding sublayer (PCS), where the first m octets are used for detecting a start position of the multichannel passive optical network data packet or the data packet segment; a submitting unit, configured to submit the multichannel passive optical network data packet or the data packet segment to an MAC layer, where the first m octets at the head of multichannel passive optical network data packet or the data packet segment are detected in the MAC layer to obtain a header of the multichannel passive optical network data packet or the data packet segment and acquire the frame delimiter; where m and n are positive integers.

In an embodiment, the parsing module includes: an acquiring unit, configured to acquire the frame sequence number in the PCS; and a processing unit, configured to submit the frame sequence number to the MAC layer through primitive while submitting the multichannel passive optical network data packet or the data packet segment to the MAC layer, and obtain the multichannel passive optical network data packet or the data packet segment and a frame sequence number corresponding to the multichannel passive optical network data packet or the data packet segment in the MAC layer.

According to another embodiment of the present disclosure, a system for bearing a frame sequence number of a multichannel passive optical network according to claim 15 is provided.

According to another embodiment not according the claimed invention, a storage medium is further provided. The storage medium which is configured to store program codes for executing steps described below:
adding a frame sequence number and a frame delimiter to a multichannel passive optical network data packet or a data packet segment to be transmitted, where the frame sequence number is used for identifying an order for transmitting the multichannel passive optical network data packet or the data packet segment, the frame delimiter is used for identifying a frame start of the multichannel passive optical network data packet or the data packet segment; and
transmitting the multichannel passive optical network data packet or the data packet segment.

In solutions in the embodiments of the present disclosure, the method includes: adding a frame sequence number and a frame delimiter to a multichannel passive optical network data packet or a data packet segment to be transmitted, where the frame sequence number is used for identifying an order for transmitting the multichannel passive optical network data packet or the data packet segment, the frame delimiter is used for identifying a frame start of the multichannel passive optical network data packet or the data packet segment; and transmitting the multichannel passive optical network data packet or the data packet segment. Through adding the frame sequence number to NGEPON data packets, normal functions of the NGEPON data packets are ensured, and the problem that the Ethernet passive optical network data packet cannot be recovered in order in the existing art is solved, and the processing efficiency of NGEPON data packets is improved.

### BRIEF DESCRIPTION OF DRAWINGS

The drawings described herein are used to provide a further understanding of the present disclosure and form a part of the present application. The exemplary embodiments and descriptions thereof in the present disclosure are used to explain the present disclosure and not to limit the present disclosure in any improper way. In the drawings:
FIG. 1 is a schematic diagram of an Ethernet frame structure in the existing art;
FIG. 2 is a schematic diagram of EPON/10GEPON frame structures in the existing art;
FIG. 3 is a schematic diagram of an EPON frame structure with an SPD in the existing art;
FIG. 4 is a schematic diagram illustrating that an SPD replaces octets in a preamble header in the existing art;
FIG. 5 is a flowchart of a method for bearing a frame sequence number of a multichannel passive optical network according to an embodiment of the present disclosure;
FIG. 6 is a schematic diagram of an EPON protocol layer model according to an embodiment of the present disclosure;
FIG. 7 is a flowchart of another method for bearing a frame sequence number of a multichannel passive optical network according to an embodiment of the present disclosure;
FIG. 8 is a block diagram of a device for bearing a frame sequence number of a multichannel passive optical network according to an embodiment of the present disclosure;
FIG. 9 is a block diagram of another device for bearing a frame sequence number of a multichannel passive optical network according to an embodiment of the present disclosure;
FIG. 10 is a schematic diagram of a relationship between an MAC layer and a PCS according to an embodiment of the present disclosure;
FIG. 11 is schematic diagram one of a processing on a transmitting side according to embodiment one of the present disclosure;
FIG. 12 is schematic diagram one of a processing on a receiving side according to embodiment one of the present disclosure;
FIG. 13 is schematic diagram two of a processing on a transmitting side according to an embodiment of the present disclosure;
FIG. 14 is schematic diagram two of a processing on a receiving side according to an embodiment of the present disclosure;
FIG. 15 is a schematic diagram of processing on a receiving side according to embodiment two of the present disclosure;
FIG. 16 is a schematic diagram of a processing on a receiving side according to embodiment two of the present disclosure;
FIG. 17 is a schematic diagram of a processing on a transmitting side according to embodiment three of the present disclosure;
FIG. 18 is a schematic diagram of a processing on a receiving side according to embodiment three of the present disclosure;
FIG. 19 is a schematic diagram of a processing on a receiving side according to embodiment four of the present disclosure;
FIG. 20 is a schematic diagram of a processing on a transmitting side according to embodiment five of the present disclosure;
FIG. 21 is a schematic diagram of a processing on a receiving side according to embodiment five of the present disclosure;
FIG. 22 is a schematic diagram of a processing on a transmitting side according to embodiment six of the present disclosure;
FIG. 23 is a schematic diagram of a processing on a receiving side according to embodiment six of the present disclosure;
FIG. 24 is a schematic diagram of a processing on a transmitting side according to embodiment seven of the present disclosure; and
FIG. 25 is a schematic diagram of a processing on a receiving side according to embodiment seven of the present disclosure.

### DETAILED DESCRIPTION

The present disclosure will be described hereinafter in detail with reference to the drawings in conjunction with the embodiments. It is to be noted that if not in collision, the embodiments and features therein in the present application may be combined with each other.

It is to be noted that the terms "first", "second" and the like in the description, claims and drawings of the present disclosure are used to distinguish between similar objects and are not necessarily used to describe a particular order or sequence.

### Embodiment one

This embodiment provides a method for bearing a frame sequence number of a multichannel passive optical network. FIG. 5 is a flowchart of a method for bearing a frame sequence number of a multichannel passive optical network according to an embodiment of the present disclosure. As shown in FIG. 5, the method includes the steps described below.

In step S502, a frame sequence number and a frame delimiter is added to a multichannel passive optical network data packet or a data packet segment to be transmitted. The frame sequence number is used for identifying an order for transmitting the multichannel passive optical network data packet or the data packet segment, and the frame delimiter is used for identifying a frame start of the multichannel passive optical network data packet or the data packet segment.

In step S504, the multichannel passive optical network data packet or the data packet segment is transmitted.

Through the above steps, the frame sequence number and the frame delimiter are added to the multichannel passive optical network data packet or the data packet segment to be transmitted. The frame sequence number is used for identifying the order for transmitting the multichannel passive optical network data packet or the data packet segment, and the frame delimiter is used for identifying the frame start of the multichannel passive optical network data packet or the data packet segment. The multichannel passive optical network data packet or the data packet segment is transmitted. Through adding the frame sequence number to the multichannel passive optical network data packet or the data packet segment, a frame start detection may be destroyed, therefore, an MAC layer and other layers at a receiving end need to cooperate to recover the frame start detection to obtain the frame sequence number, at the same time, normal functions of the multichannel passive optical network data packet or the data packet segment are ensured, and the problem that the multichannel passive optical network data packet cannot be recovered in order in the existing art is solved and the processing efficiency of the multichannel passive optical network data packet is improved.

In an embodiment, the above steps may, but may not necessarily, be executed by an OLT and an ONU, etc.

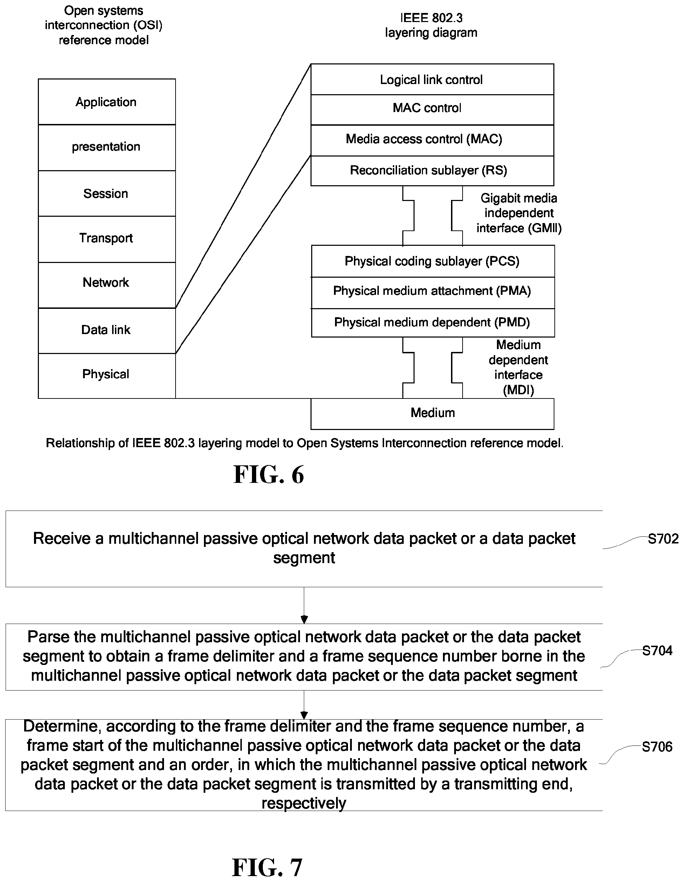

The scheme of this embodiment also relates to two aspects, one is a protocol layer structure of an Ethernet passive optical network, and the other is a number space of the frame sequence number. FIG. 6 is a schematic diagram of an EPON protocol layer model according to an embodiment of the present disclosure. The protocol layer structure of the Ethernet passive optical network is shown in FIG. 6.

Three important layers are a PCS (physical coding sublayer), a RS (reconciliation sublayer) and the MAC layer.

The function of the PCS includes encoding data bits into a code block which is able to be transmitted on a physical medium.

The RS provides a match between an xMII layer signal and a MAC layer service.

The MAC layer defines functions independent to the medium, including transmitting data to a physical layer and receiving data from the physical layer. Generally speaking, the MAC layer defines data encapsulation (such as framing, addressing and error detection) and media access (such as collision detection and error handling).

The embodiment of the present disclosure relates to layers related to MAC frame correlation processing, which is merely a preferred scheme provided by the present disclosure. These correlation processing may be implemented at other layers without violating the principle and/or order of the correlation processing, thus the correlation processing is also within the scope of the present disclosure.

The frame sequence number usually has a range. The present disclosure uses a two-octet FSN domain as an example, which does not limit the FSN to adopt other value ranges. The other value ranges may be easily deduced from the present disclosure and are also within the scope of the present disclosure.

The manner of bearing the frame sequence number of the multichannel Ethernet passive optical network MAC frame may be completed according to the subsequent specific embodiments.

The FSN numbers from 0. Each time one multichannel Ethernet passive optical network MAC frame is transmitted, the FSN increased by one until a maximum value of 65535. If one more multichannel Ethernet passive optical network MAC frame is transmitted, the FSN returns to 0. Seen from the receiving end, after receiving the multichannel Ethernet passive optical network MAC frame the FSN of which is 65535, the FSN of next multichannel Ethernet passive optical network MAC frame should be 0.

An OLT maintains an independent FSN numbering space when each LLID transmits the multichannel Ethernet passive optical network MAC frames pointing for each ONU. Different LLIDs have different FSN number spaces, and each ONU is allocated with a different LLID. The different LLIDs carrying different ONUs in the multichannel Ethernet passive optical network MAC frames form FSN number spaces which are independent to each other. When the ONU receives the multichannel Ethernet passive optical network MAC frames, the ONU determines whether the multichannel Ethernet passive optical network MAC frames are transmitted to the ONU itself through a LLID domain in the MAC frames, and after filtering the multichannel Ethernet passive optical network MAC frames through the LLID, the ONU replies the multichannel Ethernet passive optical network MAC frames in order according to the FSN. When the OLT transmits the multichannel Ethernet passive optical network MAC frames to one ONU, before entering bound channels, the order is filled in the FSN domain according to the embodiments described below or other methods, the multichannel Ethernet passive optical network MAC frames carrying the FSN domain enter into the multiple bound channels in a certain manner (such as round robin, the earliest time to transmit, etc.)The ONU side performs the receiving processing according to the embodiments described below or other methods, the RS or the MAC layer caches the received multichannel Ethernet passive optical network MAC frames to a certain degree, and recovers the received multichannel Ethernet passive optical network MAC frames in order according to the FSN domain.

For a case of a single channel, since the multichannel Ethernet passive optical network MAC frames may not be out-of-order, the FSN may not be necessary. Keeping the FSN at the receiving end is merely redundant information.

Therefore, when the OLT transmits the multichannel Ethernet passive optical network MAC frames, the OLT may directly add the FSN domain without distinguishing whether the channels are bound or not; and the OLT may determine whether the channels are bound or not in a target ONU first, and add the FSN domain when the channels are bound. The receiving side performs unified processing according to the following embodiments regardless of the processing on the transmitting side.

The ONU transmits the multichannel Ethernet passive optical network MAC frames to the OLT, maintains an independent FSN numbering space pointing for each LLID, and the transmission is the same with the downlink. On the receiving end, the OLT needs to distinguish which ONU the multichannel Ethernet passive optical network MAC frames comes from according to the LLID of the ONU and an MAC address, and establishes a corresponding FSN numbering space determination domain.

Numbering space:
The transmitting side maintains a current transmitting number for each LLID. The current transmitting number is acquired each time, it will increase by one before being acquired next time. If the current transmitting number is greater than the maximum value, the current transmitting number is configured to be the minimum value.

The receiving side maintains a current receiving number for each LLID. The current receiving number is affirmed each time, it will increase by one automatically. If the current receiving number is greater than the maximum value, the current receiving number is configured to be the minimum value.

The steps taken in the present disclosure and layers of the side in which the taken steps lie in are all preferred embodiments of the present disclosure, and other achievable combinations are within the scope of the present disclosure.

In this embodiment, adding the frame sequence number to the multichannel passive optical network data packet or the data packet segment to be transmitted includes several scenarios:
adding the frame sequence number to a header of the multichannel passive optical network data packet or the data packet segment;
adding a layer of packaging outside the multichannel passive optical network data packet or the data packet segment to be transmitted, and adding the frame sequence number in the added packaging;
splitting the multichannel passive optical network data packet to be transmitted into segments, adding a layer of packaging outside each of the segments, and adding the frame sequence number in the added packaging.

In this embodiment, the header (a preamble part) includes eight octets, and the frame sequence number is borne at the fourth and fifth octets in the preamble part.

In this embodiment, the frame sequence number ranges from 0 to 65535, and each number corresponds to a frame sequence number of multichannel passive optical network data packet.

In this embodiment, adding the frame delimiter to the multichannel passive optical network data packet or the data packet segment to be transmitted includes several scenarios:
reusing the frame delimiter of the multichannel passive optical network data packet or the data packet segment;
adding the frame delimiter to a header of the multichannel passive optical network data packet or the data packet segment;
adding a layer of packaging outside the multichannel passive optical network data packet to be transmitted, and adding the frame delimiter in the added packaging; and
splitting the multichannel passive optical network data packet to be transmitted into segments, adding a layer of packaging outside each of the segments, and adding the frame delimiter in the added packaging.

This embodiment provides a receiving method for bearing the frame sequence number of the multichannel passive optical network, which corresponds to the scheme shown in FIG. 5. FIG. 7 is a flowchart of a receiving method for bearing the frame sequence number of the multichannel passive optical network according to an embodiment of the present disclosure. As shown in FIG. 7, the method includes the step described below.

In step S702, a multichannel passive optical network data packet or a data packet segment is received.

In step S704, the multichannel passive optical network data packet or the data packet segment is parsed to obtain a frame delimiter and a frame sequence number borne in the multichannel passive optical network data packet or the data packet segment.

In step S706, according to the frame delimiter and the frame sequence number, a frame start of the multichannel passive optical network data packet or the data packet segment and an order, in which the multichannel passive optical network data packet or the data packet segment is transmitted by a transmitting end, are determined respectively.

In an embodiment, after a frame start of the multichannel passive optical network data packet or the data packet segment and an order, in which the multichannel passive optical network data packet or the data packet segment is transmitted by a transmitting end, are determined according to the frame delimiter and the frame sequence number respectively, the method further includes: recovering and/or the frame delimiter to obtain a start of the multichannel passive optical network data packet or the data packet segment according to the frame delimiter, and acquiring a frame sequence number to recover an order of the multichannel passive optical network data packet or the data packet segment.

In an optional embodiment of the present disclosure, in response to reusing the frame delimiter of the multichannel passive optical network data packet or the data packet segment, the multichannel passive optical network data packet or the data packet segment is parsed to obtain the frame delimiter and the frame sequence number borne in the multichannel passive optical network data packet or the data packet segment as follows.

In step 11, first m octets of the multichannel passive optical network data packet or the data packet segment are recovered in a PCS, where the first m octets are used for detecting a start position of the multichannel passive optical network data packet or the data packet segment.

In step S12, the multichannel passive optical network data packet or the data packet segment is submitted to an MAC layer. The first m octets at the head of multichannel passive optical network data packet or the data packet segment are detected in the MAC layer to obtain a header of the multichannel passive optical network data packet or the data packet segment and acquire the frame delimiter, where m and n are positive integers. Specifically, m is 2 and/or n is 3.

In an embodiment, in response to not reusing the frame delimiter of the multichannel passive optical network data packet or the data packet segment, the multichannel passive optical network data packet or the data packet segment is parsed to obtain the frame delimiter borne in the multichannel passive optical network data packet or the data packet segment as follows: obtaining the frame delimiter by parsing the header of the multichannel passive optical network data packet or the data packet segment.

In another optional embodiment of this embodiment, the multichannel passive optical network data packet or the data packet segment is parsed to obtain the frame sequence number borne in the multichannel passive optical network data packet or the data packet segment through steps described below.

In step S21, the frame sequence number is acquired in a PCS.

In step S22, the multichannel passive optical network data packet or the data packet segment is submitted to an MAC layer while submitting the frame sequence number to the MAC layer through primitive, and the multichannel passive optical network data packet or the data packet segment and the frame sequence number corresponding to the multichannel passive optical network data packet or the data packet segment are obtained in the MAC layer.

In an embodiment, the multichannel passive optical network data packet or the data packet segment is parsed to obtain the frame sequence number borne in the multichannel passive optical network data packet or the data packet segment in the following manner: parsing the header of the multichannel passive optical network data packet or the data packet segment to obtain the frame sequence number.

From the description of the embodiment described above, it will be apparent to those skilled in the art that the method in the embodiment described above may be implemented by software plus a necessary general-purpose hardware platform, or may of course be implemented by hardware. However, in many cases, the former is a preferred implementation mode. Based on this understanding, the solution provided by the present disclosure substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present disclosure.

### Embodiment two

This embodiment further provides a device and system for bearing a frame sequence number of a multichannel passive optical network for implementing the above-mentioned embodiments and preferred implementation modes. What has been described will not be repeated. As used below, a term "module" may be software, hardware or a combination thereof capable of implementing predetermined functions. The apparatus in the embodiment described below is preferably implemented by software, but implementation by hardware or by a combination of software and hardware is also possible and conceived.

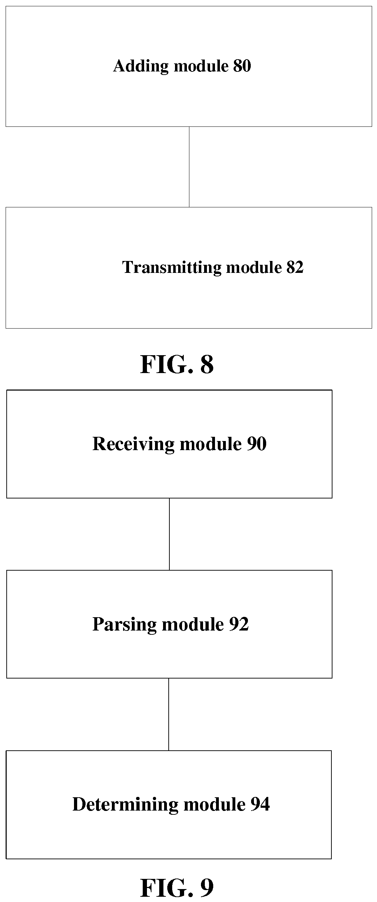

FIG. 8 is a block diagram of a device for bearing a frame sequence number of a multichannel passive optical network according to an embodiment of the present disclosure. As shown in FIG. 8, the device includes:
an adding module 80, configured to add a frame sequence number and a frame delimiter to a multichannel passive optical network data packet or a data packet segment to be transmitted, where the frame sequence number is used for identifying an order for transmitting the multichannel passive optical network data packet or the data packet segment, and the frame delimiter is used for identifying a frame start of the multichannel passive optical network data packet or the data packet segment; and
a transmitting module 82, configured to transmit the multichannel passive optical network data packet or the data packet segment.

In an embodiment, the adding module includes: a first adding unit, configured to add the frame sequence number to a header of the multichannel passive optical network data packet or the data packet segment; a second adding unit, configured to add a layer of packaging outside the multichannel passive optical network data packet of data packet segment to be transmitted, and add the frame sequence number in the added packaging; a third adding unit, configured to split the multichannel passive optical network data packet to be transmitted into segments, add a layer of packaging outside each of the segments, and add the frame sequence number in the added packaging.

In an embodiment, the header (a preamble part) includes eight octets, and the frame sequence number is borne at the fourth and fifth octets in the preamble part.

In an embodiment, the adding module includes: a fourth adding unit, configured to reuse the frame delimiter of the multichannel passive optical network data packet or the data packet segment; a fifth adding unit, configured to add the frame delimiter to a header of the multichannel passive optical network data packet or the data packet segment; a sixth adding unit, configured to add a layer of packaging outside the multichannel passive optical network data packet to be transmitted, and add the frame delimiter in the added packaging; and a seventh adding unit, configured to split the multichannel passive optical network data packet to be transmitted into segments, add a layer of packaging outside each of the segments, and add the frame delimiter in the added packaging.

FIG. 9 is a block diagram of another device for bearing a frame sequence number of a multichannel passive optical network according to an embodiment of the present disclosure. As shown in FIG. 9, the device includes:
a receiving module 90, configured to receive the multichannel passive optical network data packet or the data packet segment;
a parsing module 92, configured to parse the multichannel passive optical network data packet to obtain a frame delimiter and a frame sequence number borne in the multichannel passive optical network data packet or the data packet segment; and
a determining module 94, configured to determine, according to the frame delimiter and the frame sequence number, a frame start of the multichannel passive optical network data packet and an order, in which the multichannel passive optical network data packet is transmitted by a transmitting end, respectively.

In an embodiment, the device further includes: an acquiring module, configured to after determining, according to the frame delimiter and the frame sequence number, the frame start of the multichannel passive optical network data packet and the order, in which the multichannel passive optical network data packet is transmitted by the transmitting end, respectively, obtain a start of the multichannel passive optical network data packet or the data packet segment according to the frame delimiter; and a recovering module, configured to recover an order of the multichannel passive optical network data packet or the data packet segment according to the frame sequence number.

In an embodiment, the parsing module includes: a recovering unit, configured to recover first m octets of the multichannel passive optical network data packet or the data packet segment in a physical coding sublayer (PCS), where the first m octets are used for detecting a start position of the multichannel passive optical network data packet or the data packet segment; a submitting unit, configured to submit the multichannel passive optical network data packet or the data packet segment to an MAC layer, where n octets of the header or the preamble part of the multichannel passive optical network data packet or the data packet segment are detected in the MAC layer to obtain the frame sequence number, where m and n are positive integers. The parsing module includes: an acquiring unit, configured to acquire the frame sequence number in the PCS; and a processing unit, configured to submit the frame sequence number to the MAC layer through primitive while submitting the multichannel passive optical network data packet or the data packet segment to an MAC layer, and obtain the multichannel passive optical network data packet or the data packet segment and a frame sequence number corresponding to the multichannel passive optical network data packet or the data packet segment in the MAC layer.

This embodiment further provides a system for bearing a frame sequence number of a multichannel passive optical network. The system includes a transmitting end and a receiving end. The transmitting end includes: an adding module, configured to add a frame sequence number and a frame delimiter to a multichannel passive optical network data packet or a data packet segment to be transmitted, where the frame sequence number is used for identifying an order for transmitting the multichannel passive optical network data packet or the data packet segment, the frame delimiter is used for identifying a frame start of the multichannel passive optical network data packet or the data packet segment; and a transmitting module, configured to transmit the multichannel passive optical network data packet or the data packet segment; the receiving end includes: a receiving module, configured to receive the multichannel passive optical network data packet or the data packet segment; a parsing module, configured to parse the multichannel passive optical network data packet or the data packet segment to obtain a frame delimiter and a frame sequence number borne in the multichannel passive optical network data packet or the data packet segment; and a determining module, configured to determine, according to the frame delimiter and the frame sequence number, a frame start of the multichannel passive optical network data packet and an order, in which the multichannel passive optical network data packet is transmitted by a transmitting end respectively.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment three

A data transmission method in the multichannel Ethernet passive optical network system is not only able to realize frame sequence number carrying, but also able to ensure that a receiving end correctly identifies a frame start not only can be applied to a NGEPON, but also can be applied to an EPON/10GEPON and other passive optical network systems. This embodiment provides the data transmission method which is not only able to realize the frame sequence number carrying, but also able to ensure that the receiving end correctly identifies the frame start.

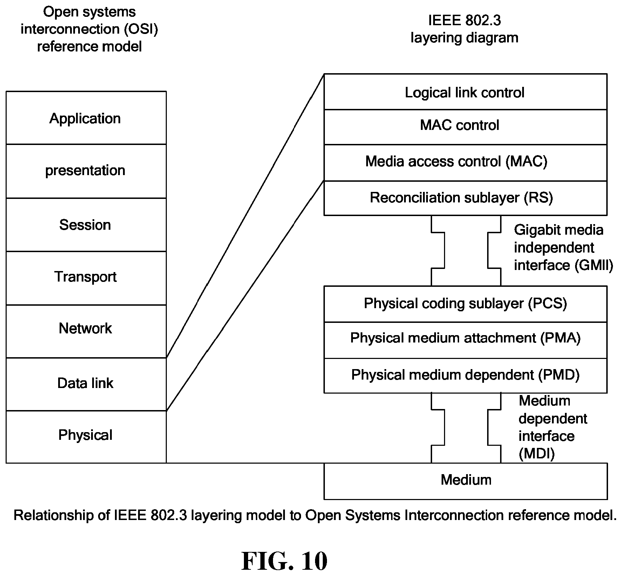

FIG. 10 is a schematic diagram of a relationship between an MAC layer and a PCS according to an embodiment of the present disclosure. As shown in FIG. 10, similar to FIG. 6, two of important layers are the PCS and the MAC layer. The function of the PCS includes encoding data bits into a code block which is able to be transmitted on a physical medium. The MAC layer defines functions independent to the medium, including transmitting data to a physical layer and receiving data from the physical layer. Generally speaking, the MAC layer defines data encapsulation (such as framing, addressing and error detection) and media access (such as collision detection and error handling).

This embodiment carries the frame sequence number in the multichannel passive optical network data packet or the data packet segment to identify an order for transmitting the Ethernet passive optical network data packet or the data packet segment. Since carrying the frame sequence number in the multichannel passive optical network data packet or the data packet segment destroys the frame start detection, therefore, the MAC layer and other layers at the receiving end need to cooperate to recover the frame start detection to obtain the frame sequence number. The receiving end determines the order of the multichannel passive optical network data packet or the data packet segment according to the frame sequence number. Even if the multichannel passive optical network data packet or the data packet segment is out-of-order in the transmission, the receiving end may recover the transmission order of the multichannel passive optical network data packet or the data packet segment according to the frame sequence number of the multichannel passive optical network data packet or the data packet segment.

Through this embodiment, on the basis of the original multichannel passive optical network frame structure, the frame sequence number carrying is added and at the same time the frame start detection is further ensured.

The present disclosure will be described in detail hereinafter in conjunction with specific embodiments.

### Specific embodiment one

### Method one for bearing a frame sequence number

The fourth and fifth octets in a preamble are used for bearing a NGEPON MAC frame sequence number (FSN), and a first octet 0x55 and a second octet 0x55 are recovered at a receiving end in a PCS for detecting an MAC frame start.

In this embodiment, the fourth and fifth octets of the preamble are used for bearing the Ethernet frame sequence number. To maintain a success rate of the Ethernet start detected on the receiving side, after the PCS on the receiving side detects the SPD, the PCS recovers 0x55 and 0x55 in two octets in a preamble header, and submits an MAC frame to an MAC layer. The MAC layer detects an Ethernet frame start position through detecting 0x55, 0x55 and 0xd5 in the first, second and third octets in the preamble header.

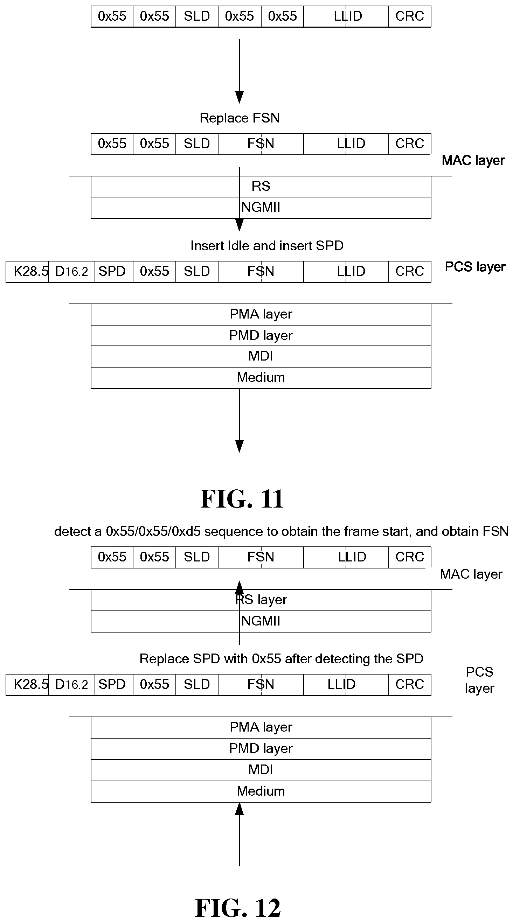

FIG. 11 is schematic diagram one of a processing on a transmitting side according to embodiment one of the present disclosure. FIG. 11 is a schematic diagram illustrating a transmission process of an Ethernet passive optical network data packet. When a MAC frame is established, the FSN is placed in two octets behind the SLD. The Ethernet passive optical network data packet enters the PCS after being processed by a RS and an xMII layer, and the processing of the PCS is unchanged. The SPD is inserted after inserting a certain number of Idle, a 0x55 octet in the header of the Ethernet passive optical network data packet is replaced, and then the data packet is transmitted after being processed by a PMA, PMD and MDI layers.

FIG. 12 is schematic diagram one of a processing on a receiving side according to embodiment one of the present disclosure. FIG. 12 is schematic diagram illustrating the processing on the receiving side. After detecting the SPD, the PCS replaces the SPD with 0x55, and submits the MAC frame to the MAC layer. The MAC layer obtains the frame start by detecting a 0x55/0x55/0xd5 sequence, and then obtains the FSN for recovering an order of the Ethernet passive optical network data packet.

In this embodiment, the fourth and fifth octets in an MAC frame header are used as a FSN domain for carrying the FSN. Considering that the first octet or the first and second octets in the MAC frame header may be covered when the SPD is inserted in the PCS on the transmitting side, toensure that the receiving side is able to detect the start of the MAC frame, the PCS on the transmitting side recovers the first octet (0x55) or the first and second octets (0x55,0x55) of the MAC frame to be used by the receiving side for detecting the frame start.

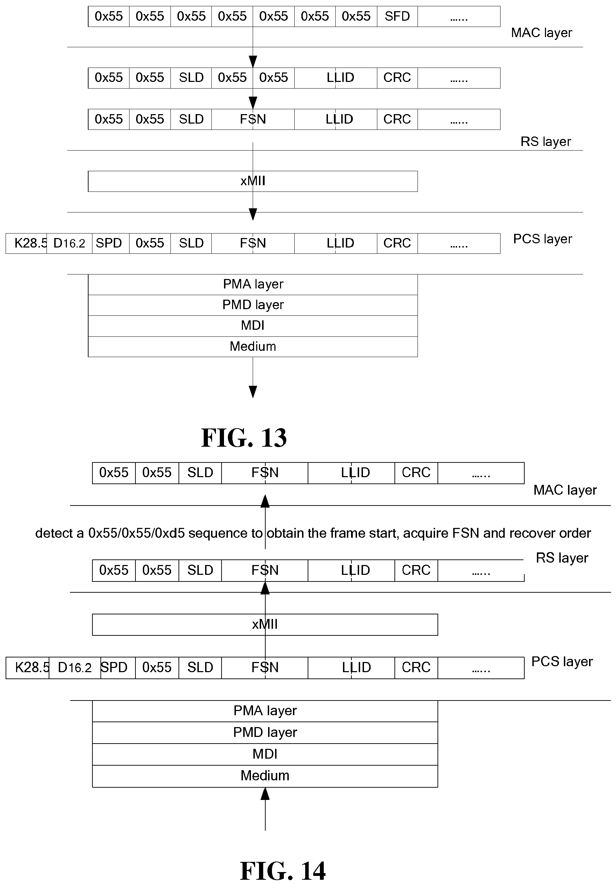

FIG. 13 is schematic diagram two of a processing on a transmitting side according to an embodiment of the present disclosure, in which one 0x55 is overwritten. FIG. 14 is schematic diagram two of a processing on a receiving side according to an embodiment of the present disclosure, in which one 0x55 is overwriten. Specific steps of this embodiment include (steps 1-4 are the processing on the transmission side, as shown in FIG. 13, and steps 5-7 are the processing on the reception side, as shown in FIG. 14).
1. The MAC layer on the transmitting side forms the MAC frames and submits the MAC frames to the RS on the transmitting side.
2. The RS layer obtains, according to a LLID corresponding to one MAC frame, a current transmitting number corresponding to the LLID as the FSN of this MAC frame, and places the LLID into a LLID domain of the MAC frame header, and places the FSN in the FSN domain, i.e., the fourth and fifth octets, and then submits the MAC frame to the PCS on the transmitting side through an xMII interface.
3. After the PCS on the transmitting side performs corresponding processing on the MAC, the PCS inserts the SPD when submitting the MAC frame to a PMA layer, according to a case of a transmitting clock, the first and second octets of the MAC frame are overwritten.
4. The MAC frame continues to be processed through the PMA layer, a PMD layer and an MDI layer on the transmitting side, and transmitted to the receiving side through a media layer.
5. The MAC frame is processed through the medium layer, the MDI layer, the PMD layer, and the PMA layer on the receiving side, and submitted to the PCS on the receiving side.
6. After the PCS on the receiving side detects the SPD, the PCS determines whether the next octet is 0x55 or 0xd5. If the next octet is 0x55, then a 0x55 is inserted behind the SPD, and a octet 0x55 in the MAC header is recovered. If the next octet is 0xd5, then two 0x55s are inserted behind the SPD, two 0x55 octets in the MAC header are recovered, and then the MAC frame is submitted to the RS on the receiving side through the xMII interface.
7. The RS on the receiving side acquires a MAC frame start position through detecting the first, second and third octets, i.e., 0x55, 0x55 and 0xd5 in the MAC frame header, and obtains the LLID and the FSN from the LLID domain and FSN domain in the MAC frame header, if the acquired FSN is the number being received currently corresponding to the LLID, then the MAC frame is submitted to the MAC layer, the number being received currently plus one, and an MAC frame in the cache which is the same with the number being received currently is forwarded, otherwise, the received MAC frame is cached.

### Specific embodiment two

### Frame sequence number bearing method two

The fourth and fifth octets in preamble are used for bearing a NGEPON MAC frame sequence number, and a FSN domain is acquired in a PCS at a receiving end. At the same time of submitting an MAC frame to an MAC layer, the FSN domain is submitted to the MAC layer through primitive.

The fourth and fifth octets in the preamble are directly used for bearing a FSN. For the MAC layer on a receiving side to detect an Ethernet start position, the PCS on the receiving side may obtain the Ethernet start position after detecting the SPD, and replace the fourth and fifth octets with 0x55 and 0x55 after acquiring the FSN, and submit the FSN to the MAC layer through primitive.

The processing on a transmitting side is the same with that in FIG. 11.

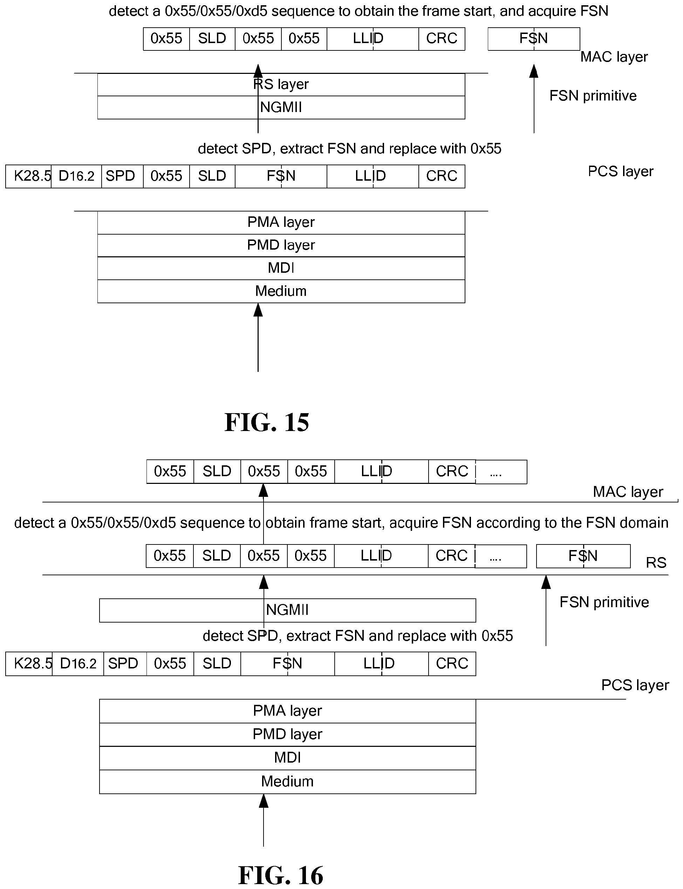

FIG. 15 is schematic diagram of the processing on the receiving side according to embodiment two of the present disclosure. The PCS extracts the FSN domain after detecting the SPD, stores the FSN and replaces the FSN domain with 0x55 and 0x55, submits the MAC frame to the MAC layer, and also submits the FSN to the MAC layer through primitive. The MAC layer detects a 0xd5/0x55/0x55 sequence to obtain the frame start, obtains the FSN for recovering a NGEPON MAC frame order though primitive.

In this embodiment, the fourth and fifth octets in an MAC frame header are used as a FSN domain for bearing the FSN, considering that the PCS on the transmitting side may overwrite the first octet or the first and second octets in the MAC frame header when inserting the SPD. For maintaining that the receiving side is able to detect an MAC frame start, therefore the FSN domain is acquired in the PCS on the receiving side, and the FSN domain in the MAC frame is replaced with 0x55 and 0x55. The third, fourth and fifth octets in the MAC frame header are used for detecting the MAC frame start, the PCS on the receiving side submits the acquired FSN domain value to a RS on the receiving side through the primitive while submitting the MAC frame to the RS on the receiving side.

Specific steps of this embodiment include: steps 1-4 are the processing on the transmitting side, as shown in FIG. 13, and steps 5-7 are the processing on the receiving side, FIG. 16 is a schematic diagram of a processing on a receiving side according to embodiment two of the present disclosure, and a case of overwriting a 0x55 is used as an example, as shown in FIG. 16.

The MAC layer on the transmitting side forms the MAC frame and submits the MAC frame to the RS on the transmitting side.

2. The RS obtains a current transmitting number corresponding to a LLID according to the LLID corresponding to the MAC frame as the FSN of the MAC frame, and places the LLID into a LLID domain of the MAC frame header, and places the FSN in the FSN domain, i.e., the fourth and fifth octets, and then submits the MAC frame to the PCS on the transmitting side through an xMII interface.

3. After the PCS on the transmitting side performs the corresponding processing on the MAC frame, the PCS inserts the SPD when submitting the MAC frame to a PMA layer, according to a case of a transmitting clock, the first and second octets of the MAC frame are overwritten.

4. The MAC frame continues to be processed through the PMA layer, a PMD layer and an MDI layer on the transmitting side, and transmitted to the receiving side through a media layer.

5. The MAC frame is processed through the medium layer, the MDI layer, the PMD layer, and the PMA layer on the receiving side, and submitted to the PCS on the receiving side.

6. After the PCS on the receiving side detects the SPD, the PCS determines whether the next octet is 0x55 or 0xd5. If the next octet is 0x55, then the FSN domain is behind 0xd5. If the next octet is 0xd5, then the FSN domain is behind 0xd5.The FSN domain is extracted and replaced with 0x55 and 0x55 and 0x55, then the MAC frame and the FSN domain value are submitted to the RS on the receiving side through the xMII interface.

7. The RS on the receiving side obtains the MAC frame and the corresponding FSN domain value, acquires an MAC frame start position through detecting the 0xd5, 0x55,0x55 sequence in the MAC frame header, acquires the LLID from the LLID domain in the MAC frame header, and acquires the FSN from the FSN domain value. If the acquired FSN is the number being received currently corresponding to the LLID, then the MAC frame is submitted to the MAC layer, the number being received currently plus one, and an MAC frame in the cache which is the same with the number being received currently is forwarded, otherwise, the received MAC frame is cached.

### Specific embodiment three

### Frame sequence number bearing method three

On the basis of the specific embodiment one, this embodiment considers a case in which a PCS on a transmitting side does not insert the SPD, octets in an MAC frame header in the PCS is not replaced.

In this embodiment, the fourth and fifth octets in the MAC frame header are used as a FSN domain for bearing the FSN. The fourth and fifth octets in the MAC frame header on the transmitting side are used for bearing the FSN, in a case in which the PCS on a receiving side does not detect a SPD, the PCS directly submits the MAC frame to a RS. The RS on the receiving side detects an Ethernet frame start position through detecting 0x55, 0x55, 0xd5 in the first, second, and third octets in MAC frame header.

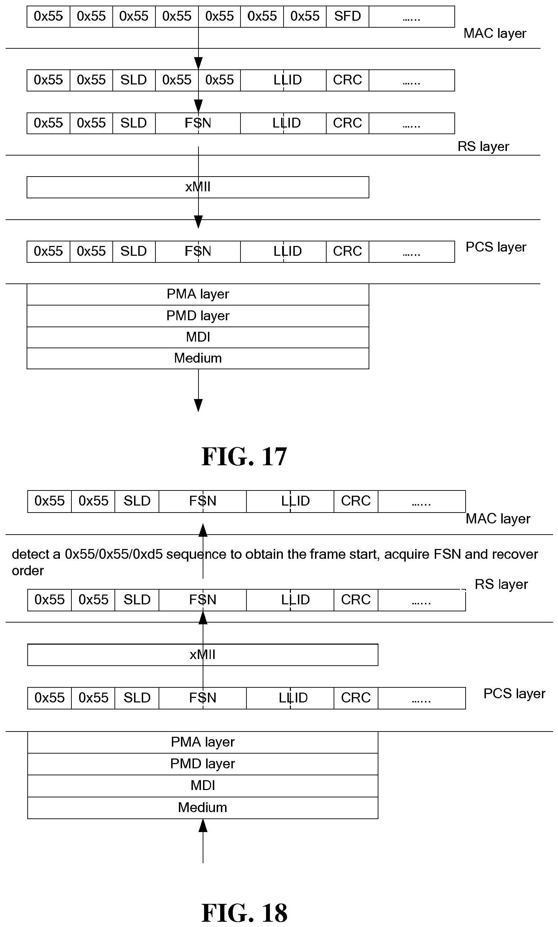

Specific steps of this embodiment include: steps 1-4 are the processing on the transmitting side, and FIG. 17 is a schematic diagram of the processing on the transmitting side according to embodiment three of the present disclosure, as shown in FIG. 7; and steps 5-7 are the processing on the receiving side, FIG. 18 is a schematic diagram of the processing on the receiving side according to embodiment three of the present disclosure, as shown in FIG. 18.

The MAC layer on the transmitting side forms the MAC frame and submits the MAC frame to the RS on the transmitting side.

2. The RS obtains a current transmitting number corresponding to a LLID according to the LLID corresponding to the MAC frame as the FSN of the MAC frame, and places the LLID into a LLID domain of the MAC frame header, and places the FSN in the FSN domain, i.e., the fourth and fifth octets, and then submits the MAC frame to the PCS on the transmitting side through an xMII interface.

3. After the PCS on the transmitting side performs corresponding processing on the MAC, the PCS submits the MAC frame to a PMA layer.

4. The MAC frame continues to be processed through the PMA layer, a PMD layer and an MDI layer on the transmitting side, and transmitted to the receiving side through a media layer.

5. The MAC frame is processed through the medium layer, the MDI layer, the PMD layer, and the PMA layer on the receiving side, and submitted to the PCS on the receiving side.

6. The PCS on the receiving side submits the MAC frame to the RS on the receiving side through the xMII interface.

7. The RS on the receiving side acquires a MAC frame start position through detecting the first, second and third octets, i.e., 0x55, 0x55 and 0xd5 in the MAC frame header, and obtains the LLID and the FSN from the LLID domain and the FSN domain in the MAC frame header, if the acquired FSN is the number being received currently corresponding to the LLID, then the MAC frame is submitted to the MAC layer, the number being received currently plus one, and an MAC frame in the cache which is the same with the number being received current ly is forwarded, otherwise, the received MAC frame is cached.

### Specific embodiment four

### Frame sequence number bearing method four

On the basis of the specific embodiment two, this embodiment considers a case in which a PCS on a transmitting side does not insert the SPD, octets in an MAC frame header in the PCS is not replaced.

In this embodiment, the fourth and fifth octets in the MAC frame header are used as a FSN domain for bearing a FSN. For maintaining that the receiving side is able to detect an MAC frame start, the FSN domain is acquired in the PCS on the receiving side, and the FSN domain in the MAC frame is replaced with 0x55 and 0x55. The 0x55, 0x55, 0xd5, 0x55, 0x55 in the first, second, third, fourth and fifth octets and any combination of the octets in the MAC frame header are used for detecting the MAC frame start, the PCS on the receiving side submits the acquired FSN domain value to a RS on the receiving side through the primitive while submitting the MAC frame to the RS on the receiving side.

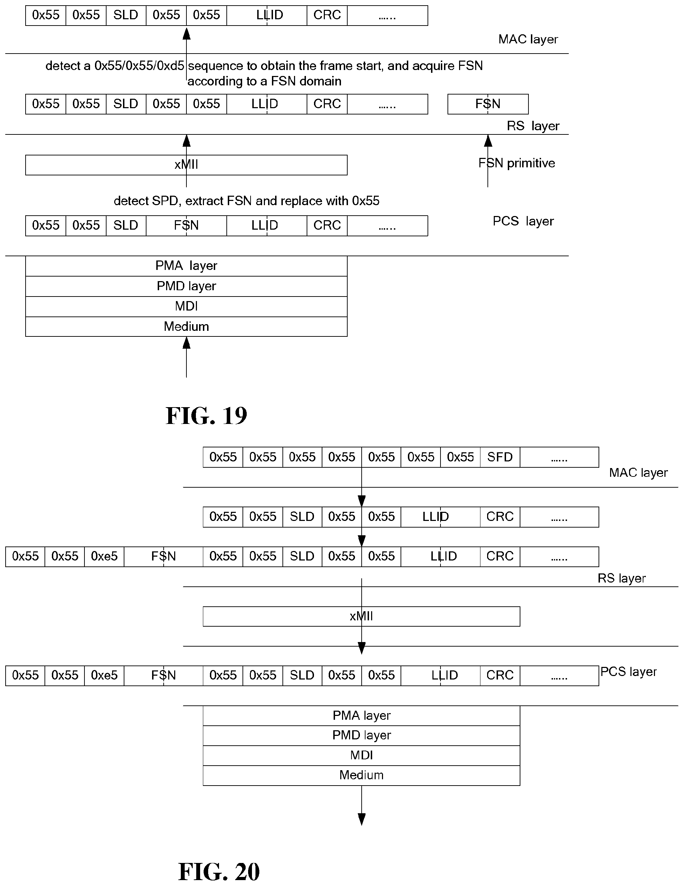

Specific steps of this embodiment include: steps 1-4 are the processing on the transmitting side, as shown in FIG. 17, and steps 5-7 are the processing on the receiving side. FIG. 19 is a schematic diagram of the processing on the receiving side according to embodiment four of the present disclosure, as shown in FIG. 19.

The MAC layer on the transmitting side forms the MAC frame and submits the MAC frame to the RS on the transmitting side.

2. The RS obtains a current transmitting number corresponding to a LLID according to the LLID corresponding to the MAC frame as the FSN of the MAC frame, and places the LLID into a LLID domain of the MAC frame header, and places the FSN in the FSN domain, i.e., the fourth and fifth octets, and then submits the MAC frame to the PCS on the transmitting side through an xMII interface.

3. After the PCS on the transmitting side performs corresponding processing on the MAC, the PCS submits the MAC frame to a PMA layer.

4. The MAC frame continues to be processed through the PMA layer, a PMD layer and an MDI layer on the transmitting side, and transmitted to the receiving side through a media layer.

5. The MAC frame is processed through the medium layer, the MDI layer, the PMD layer, and the PMA layer on the receiving side, and submitted to the PCS on the receiving side.

6. The PCS on the receiving side detects the FSN domain through detecting an idle or other feature contents before the MAC frame or contents in the MAC frame header, extracts the FSN domain and replaces the FSN domain with 0x55 and 0x55, and then submits the MAC frame and a FSN domain value to the RS on the receiving side through the xMII interface.

7. The RS on the receiving side obtains the MAC frame and the corresponding FSN domain value, acquires an MAC frame start position through detecting a 0x55, 0x55, 0xd5, 0x55, 0x55 sequence or sequences of any combination of 0x55, 0x55, 0xd5, 0x55, 0x55 in the MAC frame header, acquires the LLID from the LLID domain in the MAC frame header, and acquires the FSN from the FSN domain value. If the acquired FSN is the number being received currently corresponding to the LLID, then the MAC frame is submitted to the MAC layer, the number being received currently plus one, and an MAC frame in the cache which is the same with the number being received currently is forwarded, otherwise, the received MAC frame is cached.

### Specific embodiment five

### Frame sequence number bearing method five

In this embodiment, an encapsulation layer is added outside an MAC frame for bearing a FSN and related information, including the FSN, a FSN start (such as 0xe5, of course, other values may be used), and other start contents (such as two 0x55s )

The added encapsulation layer may be added in an MAC layer on a transmitting side, then a transmitter and a receiver do not perform the processing in a RS, the RS on the receiving side directly submits the MAC frame in the encapsulation layer to the MAC layer. The receiving side detects a 0x55, 0x55, 0xe5 octet sequence, thereby obtaining the MAC frame with the encapsulation layer is added outside, and further parsing the subsequent LLID and FSN for recovering an Ethernet passive optical network frame order.

In this embodiment, the encapsulation layer is added outside the MAC frame, including 0x55, 0x55, 0xe5 and a FSN domain of two octets. The FSN domain is used for bearing the FSN, and the FSN domain in the encapsulation added on the transmitting side bears the FSN, the PCS on the receiving side directly submits the MAC frame to the RS, and the RS on the receiving side detects an MAC frame start position through detecting 0x55, 0x55, 0xe5 in the first, second and third octets in the MAC frame header.

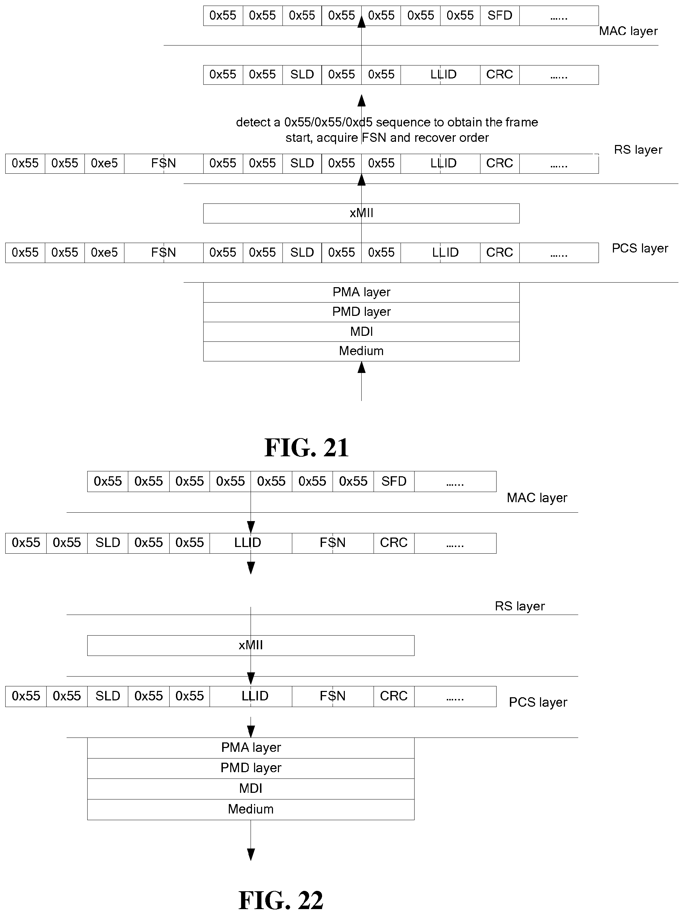

Specific steps of this embodiment include: steps 1-4 are the processing on the transmitting side, and FIG. 20 is a schematic diagram of the processing on the transmitting side according to embodiment five of the present disclosure, as shown in FIG. 20; and steps 5-7 are the processing on the receiving side, FIG. 21 is a schematic diagram of the processing on the receiving side according to embodiment five of the present disclosure, as shown in FIG.21.

The MAC layer on the transmitting side forms the MAC frame and submits the MAC frame to the RS on the transmitting side.

2. The RS places a LLID corresponding to the MAC frame into a corresponding LLID domain of the MAC frame header, and acquires a current transmitting number corresponding to the LLID as the FSN of the MAC frame, and adds 0x55, 0x55, 0xe5 and the FSN outside the MAC frame, and then submits the MAC frame to the PCS on the transmitting side through an xMII interface.

3. After the PCS on the transmitting side performs corresponding processing on the MAC, the PCS submits the MAC frame to a PMA layer.

4. The MAC frame continues to be processed through the PMA layer, a PMD layer and an MDI layer on the transmitting side, and transmitted to the receiving side through a media layer.

5. The MAC frame is processed through the medium layer, the MDI layer, the PMD layer, and the PMA layer on the receiving side, and submitted to the PCS on the receiving side.

6. The PCS on the receiving side submits the MAC frame to the RS on the receiving side through the xMII interface.

7. The RS on the receiving side acquires a MAC frame start position through detecting the first, second and third octets, i.e., 0x55, 0x55 and 0xe5 in the MAC frame header, and obtains the LLID and the FSN from the LLID domain and FSN domain in the MAC frame header, if the acquired frame sequence number is the number being received currently corresponding to the LLID, then the MAC frame is submitted to the MAC layer, the number being received currently plus one, and an MAC frame in the cache which is the same with the number being received currently is forwarded, otherwise, the received MAC frame is cached.

Of course, based on this embodiment, a case of inserting the SPD may uses the method in the embodiment one to process, which will not be repeated in this embodiment.

### Specific embodiment six

### Frame sequence number bearing method six

On the basis of the embodiment five, this embodiment redefines an MAC frame header, adds a FSN after a LLID and protects the LLID and a FSN domain through using a CRC area.

In this embodiment, the MAC frame header is redesigned, and a FSN domain of two octets is added to behind a LLID field of the original MAC header for carrying the FSN, and the CRC performs check protection on an SLD, the LLID, and the FSN.

In this embodiment, the LLID and the FSN are added in the RS on the transmitting side, and the receiving side detects a octet sequence of 0x55, 0x55, 0xd5, 0x55, 0x55 or octet sequences of any combination of 0x55, 0x55, 0xd5, 0x55, 0x55, thereby obtaining the MAC frame header, and further parsing the subsequent LLID and FSN for recovering an Ethernet passive optical network frame order.

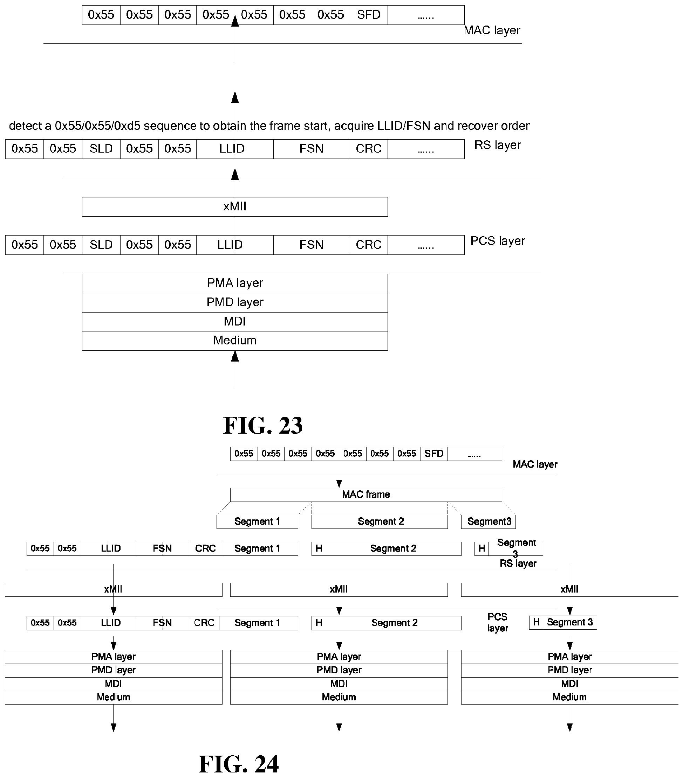

Specific steps of this embodiment include: steps 1-4 are the processing on the transmitting side, and FIG. 5 is a schematic diagram of the processing on the transmitting side according to embodiment six of the present disclosure, as shown in FIG. 22; and steps 5-7 are the processing on the receiving side, FIG. 23 is a schematic diagram of the processing on the receiving side according to embodiment six of the present disclosure, as shown in FIG.23.

The MAC layer on the transmitting side forms the MAC frame and submits the MAC frame to the RS on the transmitting side.

2. The RS places a LLID corresponding to the MAC frame into a corresponding LLID domain of the MAC frame header, and acquires a current transmitting number corresponding to the LLID as the FSN of the MAC frame, and then submits the MAC frame to the PCS on the transmitting side through an xMII interface.

3. After the PCS on the transmitting side performs corresponding processing on the MAC, the PCS submits the MAC frame to a PMA layer.

4. The MAC frame continues to be processed through the PMA layer, a PMD layer and an MDI layer on the transmitting side, and transmitted to the receiving side through a media layer.

5. The MAC frame is processed through the medium layer, the MDI layer, the PMD layer, and the PMA layer on the receiving side, and submitted to the PCS on the receiving side.

6. The PCS on the receiving side submits the MAC frame to the RS on the receiving side through the xMII interface.

7. The RS on the receiving side acquires a MAC frame start position through detecting the first, second, third, fourth and fifth octets, i.e., 0x55,0x55,0xd5,0x55,0x55 or any combination thereof in the MAC frame header, and obtains the LLID and the FSN from the LLID domain and the FSN domain in the MAC frame header, if the acquired frame sequence number is the number being received currently corresponding to the LLID, then the MAC frame is submitted to the MAC layer, the number being received currently plus one, and an MAC frame in the cache which is the same with the number being received currently is forwarded, otherwise, the received MAC frame is cached.

Of course, based on this embodiment, a case of inserting the SPD may uses the method in the embodiment one to process, which will not be repeated in this embodiment.

### Specific embodiment seven

### Frame sequence number bearing method seven

This embodiment adopts a manner of transmitting segmented data on multiple channels. The manner of data segment transmission has higher efficiency and small delay. However, the data segment destroys the original encapsulation of an MAC frame, therefore, the encapsulation needs to be redesigned on the basis of the spilt data and relates to relevant contents of LLID, a slice sequence number and a slice delimiter.

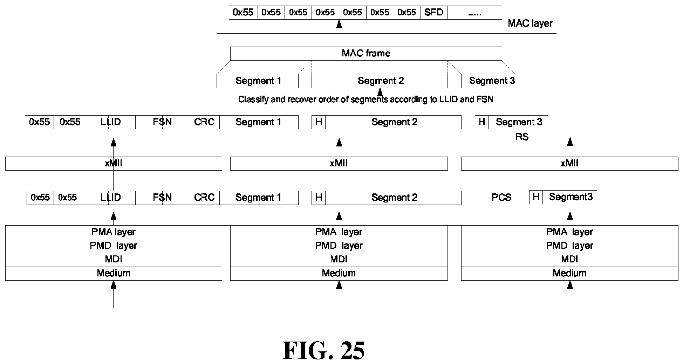

In this embodiment, the data is transmitted on the multiple channels after being segmented, and a segment header is redesigned for each segment, including domains of synchronization, LLID, FSN and CRC. FIG. 24 is a schematic diagram of the processing on the transmitting side according to embodiment seven of the present disclosure. FIG. 25 includes an implementation mode in which the synchronization is used for obtaining the segment header, which may be 0x55 and 0x55, or 0x55, 0x55, start of segment delimiter (SSD, which may have a value of 0xe5 or other values). The LLID domain is used for carrying a LLID value, the FSN domain is used for carrying the frame sequence number, and the CRC is used for performing check protection on the LLID and the FSN.

Specific steps of this embodiment include: steps 1-4 are the processing on the transmitting side, as shown in FIG. 22, and steps 5-7 are the processing on the receiving side, as shown in FIG.23.
1. The MAC layer on the transmitting side forms the MAC frame and submits the MAC frame to the RS on the transmitting side.
2. The RS segments the MAC frame according to a minimum transmission time principle of the MAC frame, and allocates each segment to a respective channel, and adds header contents such as synchronization 0x55, 0x55, LLID, FSN, CRC. The FSN is the number being received currently corresponding to the LLID, and then each segment is submitted to the PCS on the transmitting side through an xMII interface of the channel respective to each segment.
3. After the PCS on the transmitting side performs corresponding processing on the MAC, the PCS submits the MAC frame to a PMA layer.
4. The MAC frame continues to be processed through the PMA layer, a PMD layer and an MDI layer on the transmitting side, and transmitted to the receiving side through a media layer.
5. The MAC frame is processed through the medium layer, the MDI layer, the PMD layer, and the PMA layer on the receiving side, and submitted to the PCS on the receiving side.
6. The PCS on the receiving side submits the MAC frame to the RS on the receiving side through the xMII interface.
7. The RS on the receiving side acquires a segment start position through detecting the synchronization in the segment header, i.e., 0x55, 0x55, obtains the LLID and the FSN from the LLID domain and the FSN domain in the segment. If the acquired FSN is the number being received currently corresponding to the LLID, then the segment is submitted to the MAC layer, the number being received currently plus one, and a segment in the cache which is the same with the number being received currently is forwarded, otherwise, the received segment is cached.

### Embodiment four

An embodiment not according to the claimed invention provides a storage medium. In an embodiment, in this embodiment, the storage medium may be configured to store program codes for executing steps described below.

In step S 1, a frame sequence number and a frame delimiter is added to a multichannel passive optical network data packet or a data packet segment to be transmitted. The frame sequence number is used for identifying an order for transmitting the multichannel passive optical network data packet or the data packet segment, and the frame delimiter is used for identifying a frame start of the multichannel passive optical network data packet or the data packet segment.

In step S2, the multichannel passive optical network data packet or the data packet segment is transmitted.

Optionally, in this embodiment, the storage medium may include, but is not limited to, a USB flash disk, a read-only memory (ROM), a random access memory (RAM), a mobile hard disk, a magnetic disk, an optical disk or another medium capable of storing program codes.

Optionally, in this embodiment, in this embodiment, the processor executes the following step according to the program codes stored in the storage medium: adding the frame sequence number and the frame delimiter to the multichannel passive optical network data packet or the data packet segment to be transmitted, where the frame sequence number is used for identifying the order for transmitting the multichannel passive optical network data packet or the data packet segment, the frame delimiter is used for identifying the frame start of the multichannel passive optical network data packet or the data packet segment.

Optionally, in this embodiment, a processor executes the following step according to the program codes stored in the storage medium: transmitting the multichannel passive optical network data packet.

Optionally, for specific examples in the embodiment, reference may be made to the examples described in the above-mentioned embodiments and optional implementation modes, and repetition will not be made in the embodiment.

Apparently, it should be understood by those skilled in the art that each of the above-mentioned modules or steps of the present disclosure may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

Accordingly, an embodiment not according to the claimed invention provides a storage medium. The storage medium stores computer programs for executing the method for bearing the frame sequence number of the multichannel passive optical network according to the embodiments of the present disclosure.

## Claims

1. A method for bearing a frame sequence number of a multichannel passive optical network, comprising:
adding (S502) the frame sequence number and a frame delimiter to a multichannel passive optical network data packet or a data packet segment to be transmitted, wherein the frame sequence number is used for identifying an order for transmitting the multichannel passive optical network data packet or the data packet segment, the frame delimiter is used for identifying a frame start of the multichannel passive optical network data packet or the data packet segment; and
transmitting (S504) the multichannel passive optical network data packet or the data packet segment;
wherein the frame delimiter is used for recovering frame start detection to obtain the frame sequence number in a receiving end, and the frame sequence number is used for recovering a transmission order of the multichannel passive optical network data packet or the data packet segment in the receiving end; **characterized in that**
the frame sequence number is added to the multichannel passive optical network data packet or the data packet segment to be transmitted in one of the following manners:
adding an encapsulation layer outside the multichannel passive optical network data packet to be transmitted, and adding the frame sequence number in the added encapsulation layer; or
splitting the multichannel passive optical network data packet to be transmitted into segments, adding an encapsulation layer outside each of the segments, and adding the frame sequence number in the added encapsulation layer.

2. The method of claim 1, wherein the frame sequence number is added to the multichannel passive optical network data packet or the data packet segment to be transmitted in the following manner:
adding the frame sequence number to a header of the multichannel passive optical network data packet or the data packet segment to be transmitted

3. The method of claim 1, wherein the frame delimiter is added to the multichannel passive optical network data packet or the data packet segment to be transmitted in one of the following manners:
reusing the frame delimiter of the multichannel passive optical network data packet or the data packet segment to be transmitted;
adding the frame delimiter to a header of the multichannel passive optical network data packet or the data packet segment to be transmitted;
adding an encapsulation layer outside the multichannel passive optical network data packet to be transmitted, and adding the frame delimiter in the added encapsulation layer; or
splitting the multichannel passive optical network data packet to be transmitted into segments, adding an encapsulation layer outside each of the segments, and adding the frame delimiter in the added encapsulation layer.

4. A method for bearing a frame sequence number of a multichannel passive optical network, comprising:
receiving (S702) a multichannel passive optical network data packet or a data packet segment;
parsing (S704) the multichannel passive optical network data packet or the data packet segment to obtain a frame delimiter and a frame sequence number borne in the multichannel passive optical network data packet or the data packet segment; and
determining (S706), according to the frame delimiter and the frame sequence number, a frame start of the multichannel passive optical network data packet or the data packet segment and an order, in which the multichannel passive optical network data packet or the data packet segment is transmitted by a transmitting end, respectively;
wherein the frame delimiter is used for recovering frame start detection to obtain the frame sequence number in a receiving end, and the frame sequence number is used for recovering a transmission order of the multichannel passive optical network data packet or the data packet segment in the receiving end; **characterized in that**
the frame sequence number is comprised in an encapsulation layer which is outside the received multichannel passive optical network data packet; or
the frame sequence number is comprised in an encapsulation layer outside the received data packet segment.

5. The method of claim 4, wherein the frame delimiter borne in the multichannel passive optical network data packet or the data packet segment is obtained by parsing the multichannel passive optical network data packet or the data packet segment in the following manner:
recovering first m octets of the multichannel passive optical network data packet or the data packet segment in a physical coding sublayer, PCS, wherein the first m octets are used for detecting a start position of the multichannel passive optical network data packet or the data packet segment; and
submitting the multichannel passive optical network data packet or the data packet segment to a media access control, MAC, layer, wherein the first n octets at a head of the multichannel passive optical network data packet or the data packet segment are detected in the MAC layer to obtain a header of the multichannel passive optical network data packet or the data packet segment and acquire the frame delimiter;
wherein m and n are positive integers.

6. The method of claim 4, wherein the frame delimiter borne in the multichannel passive optical network data packet or the data packet segment is obtained by parsing the multichannel passive optical network data packet or the data packet segment in the following manner:
parsing a header of the multichannel passive optical network data packet or the data packet segment to obtain the frame delimiter.

7. The method of claim 4, wherein the frame sequence number borne in the multichannel passive optical network data packet or the data packet segment is obtained by parsing the multichannel passive optical network data packet or the data packet segment in the following manner:
acquiring the frame sequence number in a physical coding sublayer, PCS; and
submitting the frame sequence number to a media access control, MAC, layer through primitive while submitting the multichannel passive optical network data packet or the data packet segment to the MAC layer, and obtaining the multichannel passive optical network data packet or the data packet segment and the frame sequence number corresponding to the multichannel passive optical network data packet or the data packet segment in the MAC layer.

8. The method of claim 4, wherein the frame sequence number borne in the multichannel passive optical network data packet or the data packet segment is obtained by parsing the multichannel passive optical network data packet or the data packet segment in the following manner:
parsing a header of the multichannel passive optical network data packet or the data packet segment to obtain the frame sequence number.

9. The method of claim 4, wherein the method further comprises the following step after the determining, according to the frame delimiter and the frame sequence number, a frame start of the multichannel passive optical network data packet or the data packet segment and an order, in which the multichannel passive optical network data packet or the data packet segment is transmitted by a transmitting end, respectively:
recovering and /or acquiring the frame delimiter to obtain a start of the multichannel passive optical network data packet or the data packet segment according to the frame delimiter, and acquiring the frame sequence number to recover an order of the multichannel passive optical network data packet or the data packet segment.

10. A device for bearing a frame sequence number of a multichannel passive optical network, comprising:
an adding module (80), configured to add a frame sequence number and a frame delimiter to a multichannel passive optical network data packet or a data packet segment to be transmitted, wherein the frame sequence number is used for identifying an order for transmitting the multichannel passive optical network data packet or the data packet segment, the frame delimiter is used for identifying a frame start of the multichannel passive optical network data packet; and
a transmitting module (82), configured to transmit the multichannel passive optical network data packet or the data packet segment;
wherein the frame delimiter is used for recovering frame start detection to obtain the frame sequence number in a receiving end, and the frame sequence number is used for recovering a transmission order of the multichannel passive optical network data packet or the data packet segment in the receiving end; **characterized in that**
the adding module (80) comprises one of: a second adding unit, configured to add an encapsulation layer outside the multichannel passive optical network data packet to be transmitted, and add the frame sequence number in the added encapsulation layer; or a third adding unit, configured to split the multichannel passive optical network data packet to be transmitted into segments, add an encapsulation layer outside each of the segments, and add the frame sequence number in the added encapsulation layer.

11. The device of claim 10, wherein the adding module (80) further comprises: a first adding unit, configured to add the frame sequence number to a header of the multichannel passive optical network data packet or the data packet segment to be transmitted; or
wherein the adding module comprises one of: a fourth adding unit, configured to reuse the frame delimiter of the multichannel passive optical network data packet or the data packet segment to be transmitted; a fifth adding unit, configured to add the frame delimiter to a header of the multichannel passive optical network data packet or the data packet segment to be transmitted; a sixth adding unit, configured to add an encapsulation layer outside the multichannel passive optical network data packet to be transmitted, and add the frame delimiter in the added encapsulation layer; or a seventh adding unit, configured to split the multichannel passive optical network data packet to be transmitted into segments, add an encapsulation layer outside each of the segments, and add the frame delimiter in the added encapsulation layer.

12. A device for bearing a frame sequence number of a multichannel passive optical network, comprising:
a receiving module (90), configured to receive a multichannel passive optical network data packet or a data packet segment;
a parsing module (92), configured to parse the multichannel passive optical network data packet or the data packet segment to obtain a frame delimiter and a frame sequence number borne in the multichannel passive optical network data packet or the data packet segment; and
a determining module (94), configured to determine, according to the frame delimiter and the frame sequence number, a frame start of the multichannel passive optical network data packet and an order, in which the multichannel passive optical network data packet is transmitted by a transmitting end, respectively;
wherein the frame delimiter is used for recovering frame start detection to obtain the frame sequence number in a receiving end, and the frame sequence number is used for recovering a transmission order of the multichannel passive optical network data packet or the data packet segment in the receiving end; **characterized in that**
the frame sequence number is comprised in an encapsulation layer which is outside the
received multichannel passive optical network data packet; or
the frame sequence number is comprised in an encapsulation layer outside the received data packet segment.

13. The device of claim 12, further comprising:
an acquiring module, configured to obtain a start of the multichannel passive optical network data packet or the data packet segment according to the frame delimiter after the determining module (94) determines, according to the frame delimiter and the frame sequence number, the frame start of the multichannel passive optical network data packet and the order, in which the multichannel passive optical network data packet is transmitted by the transmitting end, respectively; and
a recovering module, configured to recover an order of the multichannel passive optical network data packet or the data packet segment according to the frame sequence number.

14. The device of claim 12, wherein the parsing module (92) comprises: a recovering unit, configured to recover first m octets of the multichannel passive optical network data packet or the data packet segment in a physical coding sublayer, PCS, wherein the first m octets are used for detecting a start position of the multichannel passive optical network data packet or the data packet segment; a submitting unit, configured to submit the multichannel passive optical network data packet or the data packet segment to a media access control, MAC, layer, wherein the first m octets at a head of the multichannel passive optical network data packet or the data packet segment are detected in the MAC layer to obtain a header of multichannel passive optical network data packet or the data packet segment and acquire the frame delimiter; wherein m and n are positive integers; or
wherein the parsing module (92) comprises: an acquiring unit, configured to acquire the frame sequence number in a physical coding sublayer, PCS; and a processing unit, configured to submit the frame sequence number to a media access control, MAC, layer through primitive while submitting the multichannel passive optical network data packet or the data packet segment to the MAC layer, and obtain the multichannel passive optical network data packet or the data packet segment and the frame sequence number corresponding to the multichannel passive optical network data packet or the data packet segment in the MAC layer.

15. A system for bearing a frame sequence number of a multichannel passive optical network, comprising a transmitting end and a receiving end;
wherein the transmitting end comprises:
a device according to claim 10; wherein the receiving end comprises:
a device according to claim 12.

## Patentansprüche

1. Verfahren zum Tragen einer Rahmensequenznummer eines passiven mehrkanaligen optischen Netzwerks, umfassend:
Hinzufügen (S502) der Rahmensequenznummer und eines Rahmenbegrenzers zu einem Datenpaket des mehrkanaligen passiven optischen Netzwerks oder einem Datenpaketsegment, das gesendet werden soll, wobei die Rahmensequenznummer zum Identifizieren einer Reihenfolge zum Senden des Datenpakets des mehrkanaligen passiven optischen Netzwerks oder des Datenpaketsegments verwendet wird, wobei der Rahmenbegrenzer zum Identifizieren eines Rahmenstarts des Datenpakets des mehrkanaligen passiven optischen Netzwerks oder des Datenpaketsegments verwendet wird; und
Senden (S504) des Datenpakets des mehrkanaligen passiven optischen Netzwerks oder des Datenpaketsegments;
wobei der Rahmenbegrenzer zum Wiederherstellen einer Rahmenstarterkennung verwendet wird, um die Rahmensequenznummer in einem Empfangsende zu erlangen, und die Rahmensequenznummer zum Wiederherstellen einer Sendereihenfolge des Datenpakets des mehrkanaligen passiven optischen Netzwerks oder des Datenpaketsegments in dem Empfangsende verwendet wird; **dadurch gekennzeichnet, dass**
die Rahmensequenznummer dem zu sendenden Datenpaket des mehrkanaligen passiven optischen Netzwerks oder dem zu sendenden Datenpaketsegment auf eine der folgenden Weisen hinzugefügt wird:
Hinzufügen einer Verkapselungsschicht außerhalb des zu sendenden Datenpakets des mehrkanaligen passiven optischen Netzwerks und Hinzufügen der Rahmensequenznummer in der hinzugefügten Verkapselungsschicht; oder
Aufteilen des zu sendenden Datenpakets des mehrkanaligen passiven optischen Netzwerks in Segmente, Hinzufügen einer Verkapselungsschicht außerhalb jedes der Segmente und Hinzufügen der Rahmensequenznummer in der hinzugefügten Verkapselungsschicht.

2. Verfahren nach Anspruch 1, wobei die Rahmensequenznummer dem zu sendenden Datenpaket des mehrkanaligen passiven optischen Netzwerks oder dem zu sendenden Datenpaketsegment auf die folgende Weise hinzugefügt wird:
Hinzufügen der Rahmensequenznummer zu einem Header des zu sendenden Datenpakets des mehrkanaligen passiven optischen Netzwerks oder des zu sendenden Datenpaketsegments.

3. Verfahren nach Anspruch 1, wobei der Rahmenbegrenzer dem zu sendenden Datenpaket des mehrkanaligen passiven optischen Netzwerks oder dem zu sendenden Datenpaketsegment auf die folgende Weise hinzugefügt wird:
Wiederverwenden des Rahmenbegrenzers des zu sendenden Datenpakets des mehrkanaligen passiven optischen Netzwerks oder des zu sendenden Datenpaketsegments;
Hinzufügen des Rahmenbegrenzers zu einem Header des zu sendenden Datenpakets des mehrkanaligen passiven optischen Netzwerks oder des zu sendenden Datenpaketsegments;
Hinzufügen einer Verkapselungsschicht außerhalb des zu sendenden Datenpakets des mehrkanaligen passiven optischen Netzwerks und Hinzufügen des Rahmenbegrenzers in der hinzugefügten Verkapselungsschicht; oder
Aufteilen des zu sendenden Datenpakets des mehrkanaligen passiven optischen Netzwerks in Segmente, Hinzufügen einer Verkapselungsschicht außerhalb jedes der Segmente und Hinzufügen des Rahmenbegrenzers in der hinzugefügten Verkapselungsschicht.

4. Verfahren zum Tragen einer Rahmensequenznummer eines passiven mehrkanaligen optischen Netzwerks, umfassend:
Empfangen (S702) eines Datenpakets des mehrkanaligen passiven optischen Netzwerks oder eines Datenpaketsegments;
Parsen (S704) des Datenpakets des mehrkanaligen passiven optischen Netzwerks oder des Datenpaketsegments, um einen Rahmenbegrenzer und eine Rahmensequenznummer zu erlangen, die in dem Datenpaket des mehrkanaligen passiven optischen Netzwerks oder dem Datenpaketsegment getragen werden; und
Bestimmen (S706), gemäß dem Rahmenbegrenzer und der Rahmensequenznummer, eines Rahmenstarts des Datenpakets des mehrkanaligen passiven optischen Netzwerks oder des Datenpaketsegments und einer Reihenfolge, in der das Datenpaket des mehrkanaligen passiven optischen Netzwerks oder das Datenpaketsegment durch ein Sendeende jeweils gesendet wird;
wobei der Rahmenbegrenzer zum Wiederherstellen einer Rahmenstarterkennung verwendet wird, um die Rahmensequenznummer in einem Empfangsende zu erlangen, und die Rahmensequenznummer zum Wiederherstellen einer Sendereihenfolge des Datenpakets des mehrkanaligen passiven optischen Netzwerks oder des Datenpaketsegments in dem Empfangsende verwendet wird; **dadurch gekennzeichnet, dass**
die Rahmensequenznummer in einer Verkapselungsschicht enthalten ist, die sich außerhalb des empfangenen Datenpakets des mehrkanaligen passiven optischen Netzwerks befindet; oder
die Rahmensequenznummer in einer Verkapselungsschicht außerhalb des empfangenen Datenpaketsegments enthalten ist.

5. Verfahren nach Anspruch 4, wobei der Rahmenbegrenzer, der in dem Datenpaket des mehrkanaligen passiven optischen Netzwerks oder dem Datenpaketsegment getragen wird, durch Parsen des Datenpakets des mehrkanaligen passiven optischen Netzwerks oder des Datenpaketsegments auf folgende Weise erlangt wird:
Wiederherstellen von ersten m Oktetten des Datenpakets des mehrkanaligen passiven optischen Netzwerks oder des Datenpaketsegments in einer physischen Codierungsteilschicht, PCS, wobei die ersten m Oktette zum Erkennen einer Startposition des Datenpakets des mehrkanaligen passiven optischen Netzwerks oder des Datenpaketsegments verwendet werden; und
Übermitteln des Datenpakets des mehrkanaligen passiven optischen Netzwerks oder des Datenpaketsegments an eine Media-Access-Control-, MAC-, Schicht, wobei die ersten n Oktette an einem Kopf des Datenpakets des mehrkanaligen passiven optischen Netzwerks oder des Datenpaketsegments in der MAC-Schicht erkannt werden, um einen Header des Datenpakets des mehrkanaligen passiven optischen Netzwerks oder des Datenpaketsegments zu erlangen und den Rahmenbegrenzer zu erfassen;
wobei m und n positive ganze Zahlen sind.

6. Verfahren nach Anspruch 4, wobei der Rahmenbegrenzer, der in dem Datenpaket des mehrkanaligen passiven optischen Netzwerks oder dem Datenpaketsegment getragen wird, durch Parsen des Datenpakets des mehrkanaligen passiven optischen Netzwerks oder des Datenpaketsegments auf folgende Weise erlangt wird:
Parsen eines Headers des Datenpakets des mehrkanaligen passiven optischen Netzwerks oder des Datenpaketsegments, um den Rahmenbegrenzer zu erlangen.

7. Verfahren nach Anspruch 4, wobei die Rahmensequenznummer, die in dem Datenpaket des mehrkanaligen passiven optischen Netzwerks oder dem Datenpaketsegment getragen wird, durch Parsen des Datenpakets des mehrkanaligen passiven optischen Netzwerks oder des Datenpaketsegments auf folgende Weise erlangt wird:
Erfassen der Rahmensequenznummer in einer physischen Codierungsteilschicht, PCS; und
Übermitteln der Rahmensequenznummer an eine Media-Access-Control-, MAC-, Schicht durch Primitive, während das Datenpaket des mehrkanaligen passiven optischen Netzwerks oder das Datenpaketsegment an die MAC-Schicht übermittelt wird, und Erlangen des Datenpakets des mehrkanaligen passiven optischen Netzwerks oder des Datenpaketsegments und der Rahmensequenznummer, die dem Datenpaket des mehrkanaligen passiven optischen Netzwerks oder dem Datenpaketsegment in der MAC-Schicht entspricht.

8. Verfahren nach Anspruch 4, wobei die Rahmensequenznummer, die in dem Datenpaket des mehrkanaligen passiven optischen Netzwerks oder dem Datenpaketsegment getragen wird, durch Parsen des Datenpakets des mehrkanaligen passiven optischen Netzwerks oder des Datenpaketsegments auf folgende Weise erlangt wird:
Parsen eines Headers des Datenpakets des mehrkanaligen passiven optischen Netzwerks oder des Datenpaketsegments, um die Rahmensequenznummer zu erlangen.

9. Verfahren nach Anspruch 4, wobei das Verfahren nach dem Bestimmen, gemäß dem Rahmenbegrenzer und der Rahmensequenznummer, eines Rahmenstarts des Datenpakets des mehrkanaligen passiven optischen Netzwerks oder des Datenpaketsegments und einer Reihenfolge, in der das Datenpaket des mehrkanaligen passiven optischen Netzwerks oder das Datenpaketsegment durch ein Sendeende jeweils gesendet wird, den folgenden Schritt umfasst:
Wiederherstellen und/oder Erfassen des Rahmenbegrenzers zum Erlangen eines Starts des Datenpakets des mehrkanaligen passiven optischen Netzwerks oder des Datenpaketsegments gemäß dem Rahmenbegrenzer und Erfassen der Rahmensequenznummer zum Wiederherstellen einer Reihenfolge des Datenpakets des mehrkanaligen passiven optischen Netzwerks oder des Datenpaketsegments.

10. Vorrichtung zum Tragen einer Rahmensequenznummer eines passiven mehrkanaligen optischen Netzwerks, umfassend:
ein Hinzufügungsmodul (80), das zum Hinzufügen der Rahmensequenznummer und eines Rahmenbegrenzers zu einem Datenpaket des mehrkanaligen passiven optischen Netzwerks oder einem Datenpaketsegment, das gesendet werden soll, konfiguriert ist, wobei die Rahmensequenznummer zum Identifizieren einer Reihenfolge zum Senden des Datenpakets des mehrkanaligen passiven optischen Netzwerks oder des Datenpaketsegments verwendet wird, wobei der Rahmenbegrenzer zum Identifizieren eines Rahmenstarts des Datenpakets des mehrkanaligen passiven optischen Netzwerks verwendet wird; und
ein Sendemodul (82), das zum Senden des Datenpakets des mehrkanaligen passiven optischen Netzwerks oder des Datenpaketsegments konfiguriert ist;
wobei der Rahmenbegrenzer zum Wiederherstellen einer Rahmenstarterkennung verwendet wird, um die Rahmensequenznummer in einem Empfangsende zu erlangen, und die Rahmensequenznummer zum Wiederherstellen einer Sendereihenfolge des Datenpakets des mehrkanaligen passiven optischen Netzwerks oder des Datenpaketsegments in dem Empfangsende verwendet wird; **dadurch gekennzeichnet, dass**
das Hinzufügungsmodul (80) eines der folgenden umfasst: eine zweite Hinzufügungseinheit, die dazu konfiguriert ist, eine Verkapselungsschicht außerhalb des zu sendenden Datenpakets des mehrkanaligen passiven optischen Netzwerks hinzuzufügen, und die Rahmensequenznummer in der hinzugefügten Verkapselungsschicht hinzuzufügen; oder eine dritte Hinzufügungseinheit, die dazu konfiguriert ist, das zu sendende Datenpaket des mehrkanaligen passiven optischen Netzwerks in Segmente aufzuteilen, eine Verkapselungsschicht außerhalb eines jeden der Segmente hinzuzufügen und die Rahmensequenznummer in der hinzugefügten Verkapselungsschicht hinzuzufügen.

11. Vorrichtung nach Anspruch 10, wobei das Hinzufügungsmodul (80) ferner umfasst: eine erste Hinzufügungseinheit, die dazu konfiguriert ist, die Rahmensequenznummer zu einem Header des zu sendenden Datenpakets des mehrkanaligen passiven optischen Netzwerks oder des zu sendenden Datenpaketsegments hinzuzufügen; oder
wobei das Hinzufügungsmodul eine der Folgenden umfasst: eine vierte Hinzufügungseinheit, die dazu konfiguriert ist, den Rahmenbegrenzer des zu sendenden Datenpakets des mehrkanaligen passiven optischen Netzwerks oder des zu sendenden Datenpaketsegments wiederzuverwenden; eine fünfte Hinzufügungseinheit, die dazu konfiguriert ist, den Rahmenbegrenzer zu einem Header des zu sendenden Datenpakets des mehrkanaligen passiven optischen Netzwerks oder des zu sendenden Datenpaketsegments hinzuzufügen; eine sechste Hinzufügungseinheit, die dazu konfiguriert ist, eine Verkapselungsschicht außerhalb des zu sendenden Datenpakets des mehrkanaligen passiven optischen Netzwerks hinzuzufügen und den Rahmenbegrenzer in der hinzugefügten Verkapselungsschicht hinzuzufügen; oder eine siebte Hinzufügungseinheit, die dazu konfiguriert ist, das zu sendende Datenpaket des mehrkanaligen passiven optischen Netzwerks in Segmente zu teilen und den Rahmenbegrenzer in der hinzugefügten Verkapselungsschicht hinzuzufügen.

12. Vorrichtung zum Tragen einer Rahmensequenznummer eines passiven mehrkanaligen optischen Netzwerks, umfassend:
ein Empfangsmodul (90), das dazu konfiguriert ist, ein Datenpaket des mehrkanaligen passiven optischen Netzwerks oder ein Datenpaketsegment zu empfangen;
ein Parsingmodul (92), das zum Parsen des Datenpaket des mehrkanaligen passiven optischen Netzwerks oder des Datenpaketsegments konfiguriert ist, um einen Rahmenbegrenzer und eine Rahmensequenznummer zu erlangen, die in dem Datenpaket des mehrkanaligen passiven optischen Netzwerks oder dem Datenpaketsegment getragen werden; und
ein Bestimmungsmodul (94), das dazu konfiguriert ist, gemäß dem Rahmenbegrenzer und der Rahmensequenznummer einen Rahmenstart des Datenpakets des mehrkanaligen passiven optischen Netzwerks und eine Reihenfolge zu bestimmen, in der das Datenpaket des mehrkanaligen passiven optischen Netzwerks jeweils durch ein Sendeende gesendet wird;
wobei der Rahmenbegrenzer zum Wiederherstellen einer Rahmenstarterkennung verwendet wird, um die Rahmensequenznummer in einem Empfangsende zu erlangen, und die Rahmensequenznummer zum Wiederherstellen einer Sendereihenfolge des Datenpakets des mehrkanaligen passiven optischen Netzwerks oder des Datenpaketsegments in dem Empfangsende verwendet wird; **dadurch gekennzeichnet, dass**
die Rahmensequenznummer in einer Verkapselungsschicht enthalten ist, die sich außerhalb des empfangenen Datenpakets des mehrkanaligen passiven optischen Netzwerks befindet; oder
die Rahmensequenznummer in einer Verkapselungsschicht außerhalb des empfangenen Datenpaketsegments enthalten ist.

13. Vorrichtung nach Anspruch 12, ferner umfassend:
ein Erfassungsmodul, das dazu konfiguriert ist, einen Start des Datenpakets des mehrkanaligen passiven optischen Netzwerks oder des Datenpaketsegments gemäß dem Rahmenbegrenzer zu erlangen, nachdem das Bestimmungsmodul (94) gemäß dem Rahmenbegrenzer und der Rahmensequenznummer den Rahmenstart des Datenpakets des mehrkanaligen passiven optischen Netzwerks und die Reihenfolge, in der das Datenpaket des mehrkanaligen passiven optischen Netzwerks jeweils durch das Sendeende gesendet wird, bestimmt hat; und
ein Wiederherstellungsmodul, das dazu konfiguriert ist, eine Reihenfolge des Datenpakets des mehrkanaligen passiven optischen Netzwerks oder des Datenpaketsegments gemäß der Rahmensequenznummer wiederherzustellen.

14. Vorrichtung nach Anspruch 12, wobei das Parsingmodul (92) umfasst: eine Wiederherstellungseinheit, die dazu konfiguriert ist, erste m Oktette des Datenpakets des mehrkanaligen passiven optischen Netzwerks oder des Datenpaketsegments in einer physischen Codierungsteilschicht, PCS, wiederherzustellen, wobei die ersten m Oktette zum Erfassen einer Startposition des Datenpakets des mehrkanaligen passiven optischen Netzwerks oder des Datenpaketsegments verwendet werden; eine Sendeeinheit, die dazu konfiguriert ist, das Datenpaket des mehrkanaligen passiven optischen Netzwerks oder das Datenpaketsegment einer Media-Access-Control-, MAC-, Schicht zu übermitteln, wobei die ersten m Oktette an einem Kopf des Datenpakets des mehrkanaligen passiven optischen Netzwerks oder des Datenpakets in der MAC-Schicht erkannt werden, um einen Header des Datenpakets des mehrkanaligen passiven optischen Netzwerks oder des Datenpaketsegments zu erlangen und den Rahmenbegrenzer zu erfassen; wobei m und n positive ganze Zahlen sind; oder
wobei das Parsingmodul (92) umfasst: eine Erfassungseinheit, die dazu konfiguriert ist, die Rahmensequenznummer in einer physischen Codierungsteilschicht, PCS, zu erfassen; und eine Verarbeitungseinheit, die dazu konfiguriert ist, die Rahmensequenznummer durch Primitive an eine Media-Access-Control-, MAC-, Schicht zu übermitteln, während das Datenpaket des mehrkanaligen passiven optischen Netzwerks oder das Datenpaketsegment an die MAC-Schicht übermittelt wird, und das Datenpaket des mehrkanaligen passiven optischen Netzwerks oder das Datenpaketsegment und die Rahmensequenznummer, die dem Datenpaket des mehrkanaligen passiven optischen Netzwerks oder dem Datenpaketsegment in der MAC-Schicht entspricht, zu erlangen.

15. System zum Tragen einer Rahmensequenznummer eines mehrkanaligen passiven optischen Netzwerks, umfassend ein Sendeende und ein Empfangsende;
wobei das Sendeende umfasst:
eine Vorrichtung nach Anspruch 10;
wobei das Empfangsende umfasst:
eine Vorrichtung nach Anspruch 12.

## Revendications

1. Procédé destiné à porter un numéro de séquence de trame dans un réseau optique passif multicanal, comprenant :
l'ajout (S502) du numéro de séquence de trame et d'un délimiteur de trame à un paquet de données de réseau optique passif multicanal ou à un segment de paquet de données à transmettre, dans lequel le numéro de séquence de trame est utilisé pour identifier un ordre de transmission du paquet de données de réseau optique passif multicanal ou du segment de paquet de données, le délimiteur de trame est utilisé pour identifier un début de trame du paquet de données de réseau optique passif multicanal ou du segment de paquet de données ; et
la transmission (S504) du paquet de données de réseau optique passif multicanal ou du segment de paquet de données ;
dans lequel le délimiteur de trame est utilisé pour récupérer une détection de début de trame afin d'obtenir le numéro de séquence de trame dans une extrémité de réception, et le numéro de séquence de trame est utilisé pour récupérer un ordre de transmission du paquet de données de réseau optique passif multicanal ou du segment de paquet de données dans l'extrémité de réception ; **caractérisé en ce que** le numéro de séquence de trame est ajouté au paquet de données de réseau optique passif multicanal ou au segment de paquet de données à transmettre de l'une des manières suivantes :
l'ajout d'une couche d'encapsulation en dehors du paquet de données de réseau optique passif multicanal à transmettre, et
l'ajout du numéro de séquence de trame dans la couche d'encapsulation ajoutée ; ou
la division du paquet de données de réseau optique passif multicanal à transmettre en segments, l'ajout d'une couche d'encapsulation en dehors de chacun des segments, et l'ajout du numéro de séquence de trame dans la couche d'encapsulation ajoutée.

2. Procédé selon la revendication 1, dans lequel le numéro de séquence de trame est ajouté au paquet de données de réseau optique passif multicanal ou au segment de paquet de données à transmettre de la manière suivante :
l'ajout du numéro de séquence de trame à un en-tête du paquet de données de réseau optique passif multicanal ou du segment de paquet de données à transmettre

3. Procédé selon la revendication 1, dans lequel le délimiteur de trame est ajouté au paquet de données de réseau optique passif multicanal ou au segment de paquet de données à transmettre de l'une des manières suivantes :
la réutilisation du délimiteur de trame du paquet de données de réseau optique passif multicanal ou du segment de paquet de données à transmettre ;
l'ajout du délimiteur de trame à un en-tête du paquet de données de réseau optique passif multicanal ou du segment de paquet de données à transmettre ;
l'ajout d'une couche d'encapsulation en dehors du paquet de données de réseau optique passif multicanal à transmettre, et
l'ajout du délimiteur de trame dans la couche d'encapsulation ajoutée ; ou
la division du paquet de données de réseau optique passif multicanal à transmettre en segments, l'ajout d'une couche d'encapsulation en dehors de chacun des segments, et l'ajout du délimiteur de trame dans la couche d'encapsulation ajoutée.

4. Procédé destiné à porter un numéro de séquence de trame dans un réseau optique passif multicanal, comprenant :
la réception (S702) d'un paquet de données de réseau optique passif multicanal ou d'un segment de paquet de données ;
l'analyse (S704) du paquet de données de réseau optique passif multicanal ou du segment de paquet de données pour obtenir un délimiteur de trame et un numéro de séquence de trame portés dans le paquet de données de réseau optique passif multicanal ou le segment de paquet de données ; et
la détermination (S706), selon le délimiteur de trame et le numéro de séquence de trame, d'un début de trame du paquet de données de réseau optique passif multicanal ou du segment de paquet de données et d'un ordre, dans lequel le paquet de données de réseau optique passif multicanal ou le segment de paquet de données est transmis par une extrémité de transmission, respectivement ;
dans lequel le délimiteur de trame est utilisé pour récupérer une détection de début de trame afin d'obtenir le numéro de séquence de trame dans une extrémité de réception, et le numéro de séquence de trame est utilisé pour récupérer un ordre de transmission du paquet de données de réseau optique passif multicanal ou du segment de paquet de données dans l'extrémité de réception ; **caractérisé en ce que** le numéro de séquence de trame est compris dans une couche d'encapsulation qui est en dehors du paquet de données de réseau optique passif multicanal reçu ; ou
le numéro de séquence de trame est compris dans une couche d'encapsulation qui est en dehors du segment de paquet de données reçu.

5. Procédé selon la revendication 4, dans lequel le délimiteur de trame porté dans le paquet de données de réseau optique passif multicanal ou le segment de paquet de données est obtenu en analysant le paquet de données de réseau optique passif multicanal ou le segment de paquet de données de la manière suivante :
la récupération des m premiers octets du paquet de données de réseau optique passif multicanal ou du segment de paquet de données dans une sous-couche de codage physique, PCS, dans lequel les m premiers octets sont utilisés pour détecter une position de départ du paquet de données de réseau optique passif multicanal ou du segment de paquet de données ; et
la soumission du paquet de données de réseau optique passif multicanal ou du segment de paquet de données à une couche de commande d'accès au support, MAC, dans lequel les n premiers octets au niveau d'une tête du paquet de données de réseau optique passif multicanal ou du segment de paquet de données sont détectés dans la couche MAC pour obtenir un en-tête du paquet de données de réseau optique passif multicanal ou du segment de paquet de données et acquérir le délimiteur de trame ;
dans lequel m et n sont des entiers positifs.

6. Procédé selon la revendication 4, dans lequel le délimiteur de trame porté dans le paquet de données de réseau optique passif multicanal ou le segment de paquet de données est obtenu en analysant le paquet de données de réseau optique passif multicanal ou le segment de paquet de données de la manière suivante :
l'analyse d'un en-tête du paquet de données de réseau optique passif multicanal ou du segment de paquet de données pour obtenir le délimiteur de trame.

7. Procédé selon la revendication 4, dans lequel le numéro de séquence de trame porté dans le paquet de données de réseau optique passif multicanal ou le segment de paquet de données est obtenu en analysant le paquet de données de réseau optique passif multicanal ou le segment de paquet de données de la manière suivante :
l'acquisition du numéro de séquence de trame dans une sous-couche de codage physique, PCS ; et
la soumission du numéro de séquence de trame à une couche de commande d'accès au support, MAC, par le biais d'une primitive tout en soumettant le paquet de données de réseau optique passif multicanal ou le segment de paquet de données à la couche MAC, et l'obtention du paquet de données de réseau optique passif multicanal ou du segment de paquet de données et du numéro de séquence de trame correspondant au paquet de données de réseau optique passif multicanal ou au segment de paquet de données dans la couche MAC.

8. Procédé selon la revendication 4, dans lequel le numéro de séquence de trame porté dans le paquet de données de réseau optique passif multicanal ou le segment de paquet de données est obtenu en analysant le paquet de données de réseau optique passif multicanal ou le segment de paquet de données de la manière suivante :
l'analyse d'un en-tête du paquet de données de réseau optique passif multicanal ou du segment de paquet de données pour obtenir le numéro de séquence de trame.

9. Procédé selon la revendication 4, dans lequel le procédé comprend également l'étape suivant la détermination, selon le délimiteur de trame et le numéro de séquence de trame, d'un début de trame du paquet de données de réseau optique passif multicanal ou du segment de paquet de données et d'un ordre, dans lequel le paquet de données de réseau optique passif multicanal ou le segment de paquet de données est transmis par une extrémité de transmission, respectivement ;
la récupération et/ou l'acquisition du délimiteur de trame pour obtenir un début du paquet de données de réseau optique passif multicanal ou du segment de paquet de données selon le délimiteur de trame, et l'acquisition du numéro de séquence de trame pour récupérer un ordre du paquet de données de réseau optique passif multicanal ou du segment de paquet de données.

10. Dispositif destiné à porter un numéro de séquence de trame dans un réseau optique passif multicanal, comprenant :
un module d'ajout (80), configuré pour ajouter un numéro de séquence de trame et un délimiteur de trame à un paquet de données de réseau optique passif multicanal ou à un segment de paquet de données à transmettre, dans lequel le numéro de séquence de trame est utilisé pour identifier un ordre de transmission du paquet de données de réseau optique passif multicanal ou du segment de paquet de données, le délimiteur de trame est utilisé pour identifier un début de trame du paquet de données de réseau optique passif multicanal ou du segment de paquet de données ; et
un module de transmission (82), configuré pour transmettre le paquet de données de réseau optique passif multicanal ou le segment de paquet de données ;
dans lequel le délimiteur de trame est utilisé pour récupérer une détection de début de trame afin d'obtenir le numéro de séquence de trame dans une extrémité de réception, et le numéro de séquence de trame est utilisé pour récupérer un ordre de transmission du paquet de données de réseau optique passif multicanal ou du segment de paquet de données dans l'extrémité de réception ; **caractérisé en ce que**
le module d'ajout (80) comprend l'une : d'une deuxième unité d'ajout, configurée pour ajouter une couche d'encapsulation en dehors du paquet de données de réseau optique passif multicanal à transmettre, et ajouter le numéro de séquence de trame dans la couche d'encapsulation ajoutée ; ou d'une troisième unité d'ajout, configurée pour diviser le paquet de données de réseau optique passif multicanal à transmettre en segments, ajouter une couche d'encapsulation en dehors de chacun des segments, et ajouter le numéro de séquence de trame dans la couche d'encapsulation ajoutée.

11. Dispositif selon la revendication 10, dans lequel le module d'ajout (80) comprend également : une première unité d'ajout, configurée pour ajouter le numéro de séquence de trame à un en-tête du paquet de données du réseau optique passif multicanal ou du segment de paquet de données à transmettre ; ou
dans lequel le module d'ajout comprend l'une : d'une quatrième unité d'ajout, configurée pour réutiliser le délimiteur de trame du paquet de données de réseau optique passif multicanal ou du segment de paquet de données à transmettre ; d'une cinquième unité d'ajout, configurée pour ajouter le délimiteur de trame à un en-tête du paquet de données de réseau optique passif multicanal ou du segment de paquet de données à transmettre ; d'une sixième unité d'ajout, configurée pour ajouter une couche d'encapsulation en dehors du paquet de données de réseau optique passif multicanal à transmettre, et ajouter le délimiteur de trame à la couche d'encapsulation ajoutée ; ou d'une septième unité d'ajout, configurée pour diviser le paquet de données de réseau optique passif multicanal à transmettre en segments, ajouter une couche d'encapsulation en dehors de chacun des segments, et ajouter le délimiteur de trame dans la couche d'encapsulation ajoutée.

12. Dispositif destiné à porter un numéro de séquence de trame dans un réseau optique passif multicanal, comprenant :
un module de réception (90), configuré pour recevoir un paquet de données de réseau optique passif multicanal ou un segment de paquet de données ;
un module d'analyse (92), configuré pour analyser le paquet de données de réseau optique passif multicanal ou le segment de paquet de données afin d'obtenir un délimiteur de trame et un numéro de séquence de trame portés dans le paquet de données de réseau optique passif multicanal ou le segment de paquet de données ; et
un module de détermination (94), configuré pour déterminer, selon le délimiteur de trame et le numéro de séquence de trame, un début de trame du paquet de données de réseau optique passif multicanal et un ordre, dans lequel le paquet de données de réseau optique passif multicanal est transmis par une extrémité de transmission, respectivement ;
dans lequel le délimiteur de trame est utilisé pour récupérer une détection de début de trame afin d'obtenir le numéro de séquence de trame dans une extrémité de réception, et le numéro de séquence de trame est utilisé pour récupérer un ordre de transmission du paquet de données de réseau optique passif multicanal ou du segment de paquet de données dans l'extrémité de réception ; **caractérisé en ce que** le numéro de séquence de trame est compris dans une couche d'encapsulation qui est en dehors du paquet de données de réseau optique passif multicanal reçu ; ou
le numéro de séquence de trame est compris dans une couche d'encapsulation en dehors du segment de paquet de données reçu.

13. Dispositif selon la revendication 12, comprenant également :
un module d'acquisition, configuré pour obtenir un début du paquet de données de réseau optique passif multicanal ou du segment de paquet de données selon le délimiteur de trame après que le module de détermination (94) détermine, selon le délimiteur de trame et le numéro de séquence de trame, le début de trame du paquet de données de réseau optique passif multicanal et l'ordre dans lequel le paquet de données de réseau optique passif multicanal est transmis par l'extrémité de transmission, respectivement ; et
un module de récupération, configuré pour récupérer un ordre du paquet de données de réseau optique passif multicanal ou du segment de paquet de données selon le numéro de séquence de trame.

14. Dispositif selon la revendication 12, dans lequel le module d'analyse (92) comprend : une unité de récupération, configurée pour récupérer des premiers m octets du paquet de données de réseau optique passif multicanal ou du segment de paquet de données dans une sous-couche de codage physique, PCS, dans lequel les premiers m octets sont utilisés pour détecter une position de départ du paquet de données de réseau optique passif multicanal ou du segment de paquet de données ; une unité de soumission, configurée pour soumettre le paquet de données de réseau optique passif multicanal ou le segment de paquet de données à une couche de commande d'accès au support, MAC, dans lequel les premiers m octets au niveau d'une tête du paquet de données de réseau optique passif multicanal ou du segment de paquet de données sont détectés dans la couche MAC afin d'obtenir une en-tête du paquet de données de réseau optique passif multicanal ou du segment de paquet de données ; dans lequel m et n sont des entiers positifs ; ou
dans lequel le module d'analyse (92) comprend : une unité d'acquisition, configurée pour acquérir le numéro de séquence de trame dans une sous-couche de codage physique, PCS ; et une unité de traitement, configurée pour soumettre le numéro de séquence de trame à une couche de commande d'accès au support, MAC, par le biais d'une primitive tout en soumettant le paquet de données de réseau optique passif multicanal ou le segment de paquet de données à la couche MAC, et obtenir le paquet de données de réseau optique passif multicanal ou le segment de paquet de données et le numéro de séquence de trame correspondant au paquet de données de réseau optique passif multicanal ou au segment de paquet de données dans la couche MAC.

15. Système destiné à porter un numéro de séquence de trame dans un réseau optique passif multicanal, comprenant une extrémité de transmission et une extrémité de réception ; dans lequel l'extrémité de transmission comprend :
un dispositif selon la revendication 10 ;
dans lequel l'extrémité de réception comprend :
un dispositif selon la revendication 12.
